# EUROPEAN PATENT APPLICATION

(11) **EP 4 598 075 A1**
(43) Date of publication of application: **06.08.2025**
(21) Application number: 23870120.5
(22) Date of filing: 30.08.2023
(51) Int. Cl.: H04W 8/24

(54) **MULTI-TERMINAL AGGREGATION TRANSMISSION METHOD, TERMINAL, NETWORK DEVICE, APPARATUS AND STORAGE MEDIUM**

(30) Priority: 29.09.2022 CN 202211205126; 05.01.2023 CN 202310014378
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2023/115753
(87) International publication number: WO 2024/066879

(57) **Abstract**

The present disclosure provides a multi-terminal aggregation transmission method, a terminal, a network device, an apparatus and a storage medium. The method comprises: determining terminal identification information of a second terminal, wherein the second terminal can be used for assisting a first terminal in performing data transmission, and there are one or more second terminals; and sending a first message to a network device, wherein the first message comprises the terminal identification information of the second terminal.

## Description

### CROSS-REFERENCES TO RELATED APPLICATIONS

The present application claims priorities to Chinese patent application No. 202310014378.6 filed on January 05, 2023, entitled "Multi-Terminal Aggregation Transmission Method, Terminal, Network Device, Apparatus and Storage Medium", and Chinese patent application No. 202211205126.3 filed on September 29, 2022, entitled "Multi-Terminal Aggregation Transmission Method, Terminal, Network Device, Apparatus and Storage Medium", which are hereby incorporated by reference in its entireties.

### FIELD

The present application relates to the field of radio communications, and in particular, to methods and apparatuses for multi-user equipment (multi-UE) aggregation transmission, UEs, a network device and a storage medium.

### BACKGROUND

In the related art, a sending power of a user equipment (UE) is limited. In case that a UE has a large amount of data to transmit, it may be considered that other UEs are used for assisting the UE in performing data transmission. This transmission mode is generally called a multi-path transmission or a multi-UE aggregation transmission.

In a transmission scenario using multi-path transmission or multi-UE aggregation transmission, it is currently considered that other UEs for assisting the UE in data transmission are specific, and these other UEs cannot be randomly selected by a network device. Therefore, in a specific case having a demand of a large amount of data transmission, it is necessary to consider how to configure various parameters of the multi-UE aggregation transmission, especially other UEs for assisting the UE in performing data transmission.

### BRIEF SUMMARY

The present application provides methods and apparatuses for multi-user equipment (multi-UE) aggregation transmission, UEs, a network device and a storage medium, which are used to solve a problem of how to configure other UEs for assisting a UE in performing data transmission in a transmission scenario of multi-UE aggregation transmission, and realize configuration of a second UE.

An embodiment of the present application provides a method for multi-user equipment (multi-UE) aggregation transmission, performed by a first UE, including:
determining UE identification information of a second UE, where the second UE is capable of assisting the first UE in performing data transmission, and a quantity of second UEs is one or more; and
sending a first message to a network device, where the first message includes the UE identification information of the second UE.

According to the method for multi-UE aggregation transmission provided by an embodiment of the present application, determining the UE identification information of the second UE includes:
in case that multiple second UEs exist, selecting one or more second UEs from the multiple second UEs.

According to the method for multi-UE aggregation transmission provided by an embodiment of the present application, the second UE is determined by at least one of the following ways:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

According to the method for multi-UE aggregation transmission provided by an embodiment of the present application, the method further includes:
in case that the second UE is in an IDLE state or an INACTIVE state, sending indication information to the second UE, and triggering the second UE to enter a radio resource control (RRC) connected state.

According to the method for multi-UE aggregation transmission provided by an embodiment of the present application, the UE identification information of the second UE uniquely identifies the second UE in at least one of the following area ranges:
a cell;
a public land mobile network (PLMN); or
a global scope.

According to the method for multi-UE aggregation transmission provided by an embodiment of the present application, in case that the UE identification information uniquely identifies the second UE in a cell, the UE identification information of the second UE is a cell radio network temporary identifier (C-RNTI) and/or a cell identifier.

According to the method for multi-UE aggregation transmission provided by an embodiment of the present application, it further includes:
in case that the UE identification information is a C-RNTI and/or a cell identifier, receiving the UE identification information sent from the second UE in the RRC connected state.

According to the method for multi-UE aggregation transmission provided by an embodiment of the present application, it further includes:
receiving first configuration information sent from the network device, where the first configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the first UE and the network device;
a mapping relationship between an end-to-end bearer between the first UE and the network device and a Uu interface radio link control (RLC) bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol (PDCP) duplication transmission;
where the direct path is a transmission path for direct communication between the first UE and the network device; and the non-direct path is a transmission path between the first UE and the network device that needs to be forwarded through the second UE.

According to the method for multi-UE aggregation transmission provided by an embodiment of the present application, the first message is carried in one of the following signalings:
a radio resource control (RRC) signaling; or
a medium access control (MAC) signaling.

According to the method for multi-UE aggregation transmission provided by an embodiment of the present application, it further includes at least one of the following:
receiving first indication information sent from the network device through broadcasting, where the first indication information is used to indicate whether the network device supports multi-UE aggregation transmission; or
reporting second indication information to the network device through a UE capability reporting procedure, where the second indication information is used to indicate whether the first UE supports multi-UE aggregation transmission.

An embodiment of the present application further provides a method for multi-user equipment (multi-UE) aggregation transmission, performed by a second UE, including:
receiving second configuration information sent from a network device, where the second UE is capable of assisting a first UE in performing data transmission.

According to the method for multi-UE aggregation transmission provided by an embodiment of the present application, the second configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the second UE and the network device;
a mapping relationship between an end-to-end bearer between the first UE and the network device and a Uu interface radio link control (RLC) bearer between the second UE and the network device; or
indication information used to indicate whether an adaptation layer exists between the second UE and the network device.

According to the method for multi-UE aggregation transmission provided by an embodiment of the present application, the second UE is determined by at least one of the following ways:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

According to the method for multi-UE aggregation transmission provided by an embodiment of the present application, it further includes:
in case that the second UE is in an IDLE state or an INACTIVE state, receiving indication information sent from the first UE, and triggering the second UE to enter a radio resource control (RRC) connected state.

According to the method for multi-UE aggregation transmission provided by an embodiment of the present application, the UE identification information of the second UE uniquely identifies the second UE in at least one of the following area ranges:
a cell;
a public land mobile network (PLMN); or
a global scope.

According to the method for multi-UE aggregation transmission provided by an embodiment of the present application, in case that the UE identification information uniquely identifies the second UE in a cell, the UE identification information of the second UE is a cell radio network temporary identifier (C-RNTI) and/or a cell identifier.

According to the method for multi-UE aggregation transmission provided by an embodiment of the present application, it further includes:
in case that the UE identification information is a C-RNTI and/or a cell identifier, sending the UE identification information to the first UE.

According to the method for multi-UE aggregation transmission provided by an embodiment of the present application, it further includes at least one of the following:
receiving first indication information sent from the network device through broadcasting, where the first indication information is used to indicate whether the network device supports multi-UE aggregation transmission; or
reporting third indication information to the network device through a UE capability reporting procedure, where the third indication information is used to indicate whether the second UE supports multi-UE aggregation transmission.

An embodiment of the present application further provides a method for multi-user equipment (multi-UE) aggregation transmission, performed by a network device, including:
receiving a first message sent from a first UE, where the first message includes UE identification information of a second UE, and the second UE is capable of assisting the first UE in performing data transmission; or
receiving a second message sent from a second UE, where the second message includes UE identification information of a first UE, and the second UE is capable of assisting the first UE in performing data transmission.

According to the method for multi-UE aggregation transmission provided by an embodiment of the present application, a way for determining the second UE includes:
in case that multiple second UEs exist, selecting one or more second UEs from the multiple second UEs.

According to the method for multi-UE aggregation transmission provided by an embodiment of the present application, it further includes at least one of the following:
sending first configuration information to the first UE based on the first message or the second message; or
sending second configuration information to the second UE based on the first message or the second message;
where the first configuration information includes at least one of the following:
   an identifier and/or configuration information of an end-to-end bearer between the first UE and the network device;
   a mapping relationship between an end-to-end bearer between the first UE and the network device and a Uu interface radio link control (RLC) logical channel between the first UE and the network device;
   a mapping relationship between an end-to-end bearer between the first UE and the network device and a Uu interface radio link control (RLC) bearer between the first UE and the network device;
   indication information used to indicate whether an end-to-end adaptation layer exists between the first UE and the network device;
   an identifier of an end-to-end bearer for the first UE that needs a second UE for assisting in performing data transmission;
   an identifier of an end-to-end bearer, among end-to-end bearers of the first UE, that needs to perform data transmission only through a non-direct path or only through a second UE;
   an identifier of an end-to-end bearer, among end-to-end bearers of the first UE, that needs to perform data transmission only through a direct path or only through the first UE; or
   an identifier of an end-to-end bearer for the first UE that needs to perform bearer allocation or packet data convergence protocol (PDCP) duplication transmission;
   where the direct path is a transmission path for direct communication between the first UE and the network device; and the non-direct path is a transmission path between the first UE and the network device that needs to be forwarded through the second UE; and
   where the second configuration information includes at least one of the following:
      an identifier and/or configuration information of an end-to-end bearer between the first UE and the network device;
      a mapping relationship between an end-to-end bearer between the first UE and the network device and a Uu interface radio link control (RLC) logical channel between the second UE and the network device;
      a mapping relationship between an end-to-end bearer between the first UE and the network device and a Uu interface radio link control (RLC) bearer between the second UE and the network device; or
      indication information used to indicate whether an adaptation layer exists between the second UE and the network device.

According to the method for multi-UE aggregation transmission provided by an embodiment of the present application, the first message or the second message is carried in one of the following signalings:
a radio resource control (RRC) signaling; or
a medium access control (MAC) signaling.

According to the method for multi-UE aggregation transmission provided by an embodiment of the present application, it further includes at least one of the following:
sending first indication information by broadcasting, where the first indication information is used to indicate whether the network device supports multi-UE aggregation transmission;
receiving second indication information reported from the first UE through a UE capability reporting procedure, where the second indication information is used to indicate whether the first UE supports multi-UE aggregation transmission; or
receiving third indication information reported from the second UE through a UE capability reporting procedure, where the third indication information is used to indicate whether the second UE supports multi-UE aggregation transmission.

An embodiment of the present application further provides a first user equipment (UE), including a memory, a transceiver and a processor,
where the memory is used for storing a computer program, the transceiver is used for receiving and sending data under control of the processor, and the processor is used for reading the computer program in the memory and performing the following operations:
determining UE identification information of a second UE, where the second UE is capable of assisting the first UE in performing data transmission, and a quantity of second UEs is one or more; and
sending a first message to a network device, where the first message includes the UE identification information of the second UE.

According to the first UE provided by an embodiment of the present application, determining the UE identification information of the second UE includes:
in case that multiple second UEs exist, selecting one or more second UEs from the multiple second UEs.

According to the first UE provided by an embodiment of the present application, the second UE is determined by at least one of the following ways:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

According to the first UE provided by an embodiment of the present application, the operations further include:
in case that the second UE is in an IDLE state or an INACTIVE state, sending indication information to the second UE, and triggering the second UE to enter a radio resource control (RRC) connected state.

According to the first UE provided by an embodiment of the present application, the UE identification information of the second UE uniquely identifies the second UE in at least one of the following area ranges:
a cell;
a public land mobile network (PLMN); or
a global scope.

According to the first UE provided by an embodiment of the present application, in case that the UE identification information uniquely identifies the second UE in a cell, the UE identification information of the second UE is a cell radio network temporary identifier (C-RNTI) and/or a cell identifier.

According to the first UE provided by an embodiment of the present application, the operations further include:
in case that the UE identification information is a C-RNTI and/or a cell identifier, receiving the UE identification information sent from the second UE in the RRC connected state.

According to the first UE provided by an embodiment of the present application, the operations further include:
receiving first configuration information sent from the network device, where the first configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the first UE and the network device;
a mapping relationship between an end-to-end bearer between the first UE and the network device and a Uu interface radio link control (RLC) bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol (PDCP) duplication transmission;
where the direct path is a transmission path for direct communication between the first UE and the network device; and the non-direct path is a transmission path between the first UE and the network device that needs to be forwarded through the second UE.

According to the first UE provided by an embodiment of the present application, the first message is carried in one of the following signalings:
a radio resource control (RRC) signaling; or
a medium access control (MAC) signaling.

According to the first UE provided by an embodiment of the present application, the operations further include at least one of the following:
receiving first indication information sent from the network device through broadcasting, where the first indication information is used to indicate whether the network device supports multi-UE aggregation transmission; or
reporting second indication information to the network device through a UE capability reporting procedure, where the second indication information is used to indicate whether the first UE supports multi-UE aggregation transmission.

An embodiment of the present application further provides a second user equipment (UE), including a memory, a transceiver and a processor,
where the memory is used for storing a computer program, the transceiver is used for receiving and sending data under control of the processor, and the processor is used for reading the computer program in the memory and performing the following operations:
receiving second configuration information sent from a network device, where the second UE is capable of assisting a first UE in performing data transmission.

According to the second UE provided by an embodiment of the present application, the second configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the second UE and the network device;
a mapping relationship between an end-to-end bearer between the first UE and the network device and a Uu interface radio link control (RLC) bearer between the second UE and the network device; or
indication information used to indicate whether an adaptation layer exists between the second UE and the network device.

According to the second UE provided by an embodiment of the present application, the second UE is determined by at least one of the following ways:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

According to the second UE provided by an embodiment of the present application, the operations further include:
in case that the second UE is in an IDLE state or an INACTIVE state, receiving indication information sent from the first UE, and triggering the second UE to enter a radio resource control (RRC) connected state.

According to the second UE provided by an embodiment of the present application, the operations further include:
indicating UE identification information of the second UE to the first UE or sending a second message to the network device, where the second message includes UE identification information of the first UE.

According to the second UE provided by an embodiment of the present application, the UE identification information of the second UE uniquely identifies the second UE in at least one of the following area ranges:
a cell;
a public land mobile network (PLMN); or
a global scope.

According to the second UE provide by an embodiment of the present application, in case that the UE identification information uniquely identifies the second UE in a cell, the UE identification information of the second UE is a cell radio network temporary identifier (C-RNTI) and/or a cell identifier.

According to the second UE provided by an embodiment of the present application, the operations further include:
in case that the UE identification information is a C-RNTI and/or a cell identifier, sending the UE identification information to the first UE.

According to the second UE provided by an embodiment of the present application, the operations further include at least one of the following:
receiving first indication information sent from the network device through broadcasting, where the first indication information is used to indicate whether the network device supports multi-UE aggregation transmission; or
reporting third indication information to the network device through a UE capability reporting procedure, where the third indication information is used to indicate whether the second UE supports multi-UE aggregation transmission.

An embodiment of the present application further provides a network device, including a memory, a transceiver and a processor,
where the memory is used for storing a computer program, the transceiver is used for receiving and sending data under control of the processor, and the processor is used for reading the computer program in the memory and performing the following operations:
receiving a first message sent from a first user equipment (UE), where the first message includes UE identification information of a second UE, and the second UE is capable of assisting the first UE in performing data transmission; or
receiving a second message sent from a second UE, where the second message includes UE identification information of a first UE, and the second UE is capable of assisting the first UE in performing data transmission.

According to the network device provided by an embodiment of the present application, a way for determining the second UE includes:
in case that multiple second UEs exist, selecting one or more second UEs from the multiple second UEs.

According to the network device provided by an embodiment of the present application, the operations further include at least one of the following:
sending first configuration information to the first UE based on the first message or the second message; or
sending second configuration information to the second UE based on the first message or the second message;
where the first configuration information includes at least one of the following:
   an identifier and/or configuration information of an end-to-end bearer between the first UE and the network device;
   a mapping relationship between an end-to-end bearer between the first UE and the network device and a Uu interface radio link control (RLC) logical channel between the first UE and the network device;
   a mapping relationship between an end-to-end bearer between the first UE and the network device and a Uu interface radio link control (RLC) bearer between the first UE and the network device; or
   indication information used to indicate whether an end-to-end adaptation layer exists between the first UE and the network device; and
   where the second configuration information includes at least one of the following:
      an identifier and/or configuration information of an end-to-end bearer between the first UE and the network device;
      a mapping relationship between an end-to-end bearer between the first UE and the network device and a Uu interface radio link control (RLC) logical channel between the second UE and the network device;
      a mapping relationship between an end-to-end bearer between the first UE and the network device and a Uu interface radio link control (RLC) bearer between the second UE and the network device; or
      indication information used to indicate whether an adaptation layer exists between the second UE and the network device.

According to the network device provided by an embodiment of the present application, the first message is carried in one of the following signalings:
a radio resource control (RRC) signaling; or
a medium access control (MAC) signaling.

According to the network device provided by an embodiment of the present application, the operations further include at least one of the following:
sending first indication information by broadcasting, where the first indication information is used to indicate whether the network device supports multi-UE aggregation transmission;
receiving second indication information reported from the first UE through a UE capability reporting procedure, where the second indication information is used to indicate whether the first UE supports multi-UE aggregation transmission; or
receiving third indication information reported from the second UE through a UE capability reporting procedure, where the third indication information is used to indicate whether the second UE supports multi-UE aggregation transmission.

An embodiment of the present application further provides an apparatus for multi-user equipment (multi-UE) aggregation transmission, including:
a UE identification information determining unit, used for determining UE identification information of a second UE, where the second UE is capable of assisting a first UE in performing data transmission, and a quantity of second UEs is one or more; and
a first message sending unit, used for sending a first message to a network device, where the first message includes the UE identification information of the second UE.

In an embodiment, the UE identification information determining unit is used for:
in case that multiple second UEs exist, selecting one or more second UEs from the multiple second UEs.

In an embodiment, the apparatus further includes: a second UE first determining unit, where the second UE first determining unit performs at least one of the following operations:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

In an embodiment, the apparatus further includes:
an indication information first sending unit, used for, in case that the second UE is in an IDLE state or an INACTIVE state, sending indication information to the second UE, and triggering the second UE to enter a radio resource control (RRC) connected state.

In an embodiment, the UE identification information of the second UE uniquely identifies the second UE in at least one of the following area ranges:
a cell;
a public land mobile network (PLMN); or
a global scope.

In an embodiment, in case that the UE identification information uniquely identifies the second UE in a cell, the UE identification information of the second UE is a cell radio network temporary identifier (C-RNTI) and/or a cell identifier.

In an embodiment, the apparatus further includes:
a UE identification information receiving unit, used for in case that the UE identification information is a C-RNTI and/or a cell identifier, receiving the UE identification information sent from the second UE in the RRC connected state.

In an embodiment, the apparatus further includes:
a first configuration information receiving unit, used for receiving first configuration information sent from the network device, where the first configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the first UE and the network device;
a mapping relationship between an end-to-end bearer between the first UE and the network device and a Uu interface radio link control (RLC) bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol (PDCP) duplication transmission;
where the direct path is a transmission path for direct communication between the first UE and the network device; and the non-direct path is a transmission path between the first UE and the network device that needs to be forwarded through the second UE.

In an embodiment, the first message is carried in one of the following signalings:
a radio resource control (RRC) signaling; or
a medium access control (MAC) signaling.

In an embodiment, the apparatus further includes at least one of the following:
a first indication information first receiving unit, used for receiving first indication information sent from the network device through broadcasting, where the first indication information is used to indicate whether the network device supports multi-UE aggregation transmission; or
a second indication information reporting unit, used for reporting second indication information to the network device through a UE capability reporting procedure, where the second indication information is used to indicate whether the first UE supports multi-UE aggregation transmission.

An embodiment of the present application further provides an apparatus for multi-user equipment (multi-UE) aggregation transmission, including:
a second configuration information receiving unit, used for receiving second configuration information sent from a network device, where a second UE is capable of assisting a first UE in performing data transmission.

In an embodiment, the second configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the second UE and the network device;
a mapping relationship between an end-to-end bearer between the first UE and the network device and a Uu interface radio link control (RLC) bearer between the second UE and the network device; or
indication information used to indicate whether an adaptation layer exists between the second UE and the network device.

In an embodiment, the apparatus further includes: a second UE second determining unit, where the second UE second determining unit performs at least one of the following operations:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

In an embodiment, the apparatus further includes:
an indication information sending second unit, used for, in case that the second UE is in an IDLE state or an INACTIVE state, receiving indication information sent from the first UE, and triggering the second UE to enter a radio resource control (RRC) connected state.

In an embodiment, the apparatus further includes:
a second message sending unit, used for indicating UE identification information of the second UE to the first UE or sending a second message to the network device, where the second message includes UE identification information of the first UE.

In an embodiment, the UE identification information of the second UE uniquely identifies the second UE in at least one of the following area ranges:
a cell;
a public land mobile network (PLMN); or
a global scope.

In an embodiment, in case that the UE identification information uniquely identifies the second UE in a cell, the UE identification information of the second UE is a cell radio network temporary identifier (C-RNTI) and/or a cell identifier.

In an embodiment, the apparatus further includes:
a UE identification information sending unit, used for, in case that the UE identification information is a C-RNTI and/or a cell identifier, sending the UE identification information to the first UE.

In an embodiment, the apparatus further includes at least one of the following:
a first indication information second receiving unit, used for receiving first indication information sent from the network device through broadcasting, where the first indication information is used to indicate whether the network device supports multi-UE aggregation transmission; or
a third indication information reporting unit, used for reporting third indication information to the network device through a UE capability reporting procedure, where the third indication information is used to indicate whether the second UE supports multi-UE aggregation transmission.

An embodiment of the present application further provides an apparatus for multi-user equipment (multi-UE) aggregation transmission, including:
a message receiving unit, used for receiving a first message sent from a first UE, where the first message includes UE identification information of a second UE, and the second UE is capable of assisting the first UE in performing data transmission; or
receiving a second message sent from a second UE, where the second message includes UE identification information of a first UE, and the second UE is capable of assisting the first UE in performing data transmission.

In an embodiment, the apparatus further includes:
a second UE third determining unit, used for, in case that multiple second UEs exist, selecting one or more second UEs from the multiple second UEs.

In an embodiment, the apparatus further includes: a first configuration information sending unit, where the first configuration information sending unit is used for performing at least one of the following:
sending first configuration information to the first UE based on the first message or the second message; or
sending second configuration information to the second UE based on the first message or the second message;
where the first configuration information includes at least one of the following:
   an identifier of an end-to-end bearer and/or configuration information between the first UE and a network device;
   a mapping relationship between an end-to-end bearer between the first UE and a network device and a Uu interface radio link control (RLC) logical channel between the first UE and the network device;
   a mapping relationship between an end-to-end bearer between the first UE and a network device and a Uu interface radio link control (RLC) bearer between the first UE and the network device;
   indication information used to indicate whether an end-to-end adaptation layer exists between the first UE and a network device;
   an identifier of an end-to-end bearer for the first UE that needs a second UE for assisting in performing data transmission;
   an identifier of an end-to-end bearer, among end-to-end bearers of the first UE, that needs to perform data transmission only through a non-direct path or only through a second UE;
   an identifier of an end-to-end bearer, among end-to-end bearers of the first UE, that needs to perform data transmission only through a direct path or only through the first UE; or
   an identifier of an end-to-end bearer for the first UE that needs to perform bearer allocation or packet data convergence protocol (PDCP) duplication transmission;
   where the direct path is a transmission path for direct communication between the first UE and the network device; and the non-direct path is a transmission path between the first UE and the network device that needs to be forwarded through the second UE; and
   where the second configuration information includes at least one of the following:
      an identifier and/or configuration information of an end-to-end bearer between the first UE and the network device;
      a mapping relationship between an end-to-end bearer between the first UE and the network device and a Uu interface radio link control (RLC) logical channel between the second UE and the network device;
      a mapping relationship between an end-to-end bearer between the first UE and the network device and a Uu interface radio link control (RLC) bearer between the second UE and the network device; or
      indication information used to indicate whether an adaptation layer exists between the second UE and the network device.

In an embodiment, the first message or the second message is carried in one of the following signalings:
a radio resource control (RRC) signaling; or
a medium access control (MAC) signaling.

In an embodiment, the apparatus further includes at least one of the following:
a first indication information sending unit, used for sending first indication information by broadcasting, where the first indication information is used to indicate whether the network device supports multi-UE aggregation transmission;
a second indication information receiving unit, used for receiving second indication information reported from the first UE through a UE capability reporting procedure, where the second indication information is used to indicate whether the first UE supports multi-UE aggregation transmission; or
a third indication information receiving unit, used for receiving third indication information reported from the second UE through a UE capability reporting procedure, where the third indication information is used to indicate whether the second UE supports multi-UE aggregation transmission.

An embodiment of the present application further provides a processor-readable storage medium, where the processor-readable storage medium stores a computer program, and the computer program is used to cause a processor to perform the methods for multi-user equipment (multi-UE) aggregation transmission described above.

In the methods and apparatuses for multi-UE aggregation transmission, the UEs, the network device and the storage medium provided by the present application, the UE identification information of the second UE is determined by the first UE, and the UE identification information of the second UE is sent to the network device, so that the network device can configure the first UE and the second UE based on the first message sent from the first UE, thereby realizing the second UE assisting the first UE in performing data transmission.

### BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.
FIG. 1 is a first schematic flowchart of a method for multi-user equipment (multi-UE) aggregation transmission according to an embodiment of the present application;
FIG. 2 is a schematic diagram of a solution for a centralized control communication of a network device;
FIG. 3 is a schematic diagram of a solution for introducing direct communication;
FIG. 4 is a schematic diagram of a solution for a relay existing between a user equipment (UE) device and a network device;
FIG. 5 is a schematic diagram of a solution for multi-path transmission;
FIG. 6 is a second schematic flowchart of a method for multi-user equipment (multi-UE) aggregation transmission according to an embodiment of the present application;
FIG. 7 is a third schematic flowchart of a method for multi-user equipment (multi-UE) aggregation transmission according to an embodiment of the present application;
FIG. 8 is a first signaling interaction flowchart of a method for multi-user equipment (multi-UE) aggregation transmission according to an embodiment of the present application;
FIG. 9 is a second signaling interaction flowchart of a method for multi-user equipment (multi-UE) aggregation transmission according to an embodiment of the present application;
FIG. 10 is a schematic structural diagram of a first user equipment (UE) according to an embodiment of the present application;
FIG. 11 is a schematic structural diagram of a second user equipment (UE) according to an embodiment of the present application;
FIG. 12 is a schematic structural diagram of a network device according to an embodiment of the present application;
FIG. 13 is a first schematic structural diagram of an apparatus for multi-user equipment (multi-UE) aggregation transmission according to an embodiment of the present application;
FIG. 14 is a second schematic structural diagram of an apparatus for multi-user equipment (multi-UE) aggregation transmission according to an embodiment of the present application; and
FIG. 15 is a third schematic structural diagram of an apparatus for multi-user equipment (multi-UE) aggregation transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In addition, the terms "first", "second", etc. are used only for descriptive purposes to distinguish features with similarity, and should not be understood as indicating or implying relative importance or implicitly indicating a quantity of indicated features. Therefore, a feature defined as "first" or "second" may explicitly or implicitly include at least one such feature. In the embodiments of the present application, the term "multiple" refers to two or more, and other quantifiers are similar.

In the present application, "determine B based on A" means that the factor A should be considered when determining B. It is not limited to "B can be determined based on A alone", but should further include: "determine B based on A and C", "determine B based on A, C and E", "determine C based on A, and further determine B based on C", etc. In addition, it can further include taking A as a condition for determining B, for example, "when A meets the first condition, use the first method to determine B"; for example, "when A meets the second condition, determine B", etc.; for another example, "when A meets the third condition, determine B based on the first parameter", etc. It can also be a condition that takes A as a factor for determining B, for example, "when A meets the first condition, use the first method to determine C, and further determine B based on C", etc.

The solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocketsized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

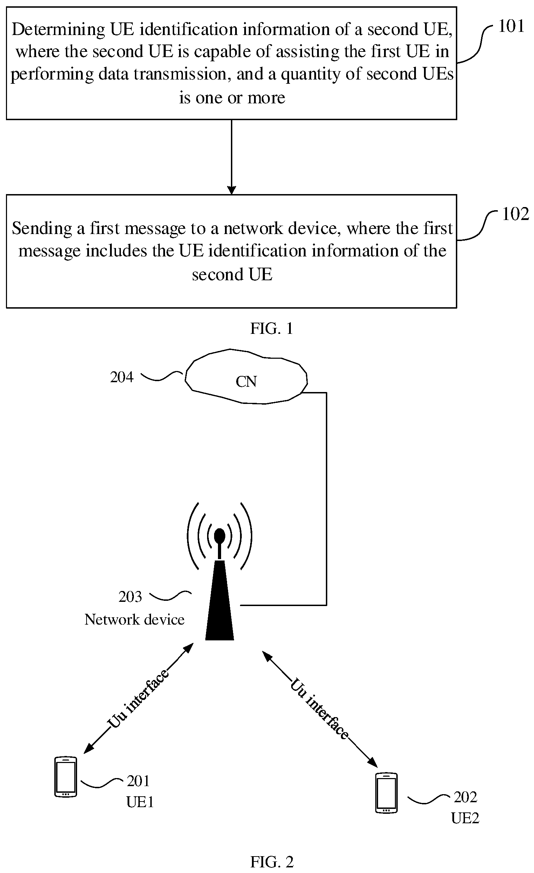

FIG. 1 is a first schematic flowchart of a method for multi-user equipment (multi-UE) aggregation transmission according to an embodiment of the present application. Referring to FIG. 1, an embodiment of the present application provides a method for multi-UE aggregation transmission, performed by a first UE, such as a mobile phone, and the method includes the following steps.

Step 101: determining UE identification information of a second UE, where the second UE is capable of assisting the first UE in performing data transmission, and a quantity of second UEs is one or more.

Step 102: sending a first message to a network device, where the first message includes the UE identification information of the second UE.

In an embodiment, multi-UE aggregation transmission is that one UE performs data transmission with assistance of other UEs, which may also be called multi-path transmission. The first UE determines the UE identification information of the second UE, and the first UE sends a first message to the network device through an Uu interface to report the identification information of the second UE. The second UE is a UE that is capable of assisting the first UE in performing data transmission. Some data transmission schemes are described in the following to further illustrate specific schemes of the embodiments of the present application.

FIG. 2 is a schematic diagram of a solution for a centralized control communication of a network device. Referring to FIG. 2, traditional radio communications use a cellular network communication method, i.e., a UE (201, UE1, 202, UE2) and a network device (203) transmit uplink and downlink data/control information through a Uu interface, and after accessing a radio access network through network devices such as base stations, a signal is transmitted to a core network (204).

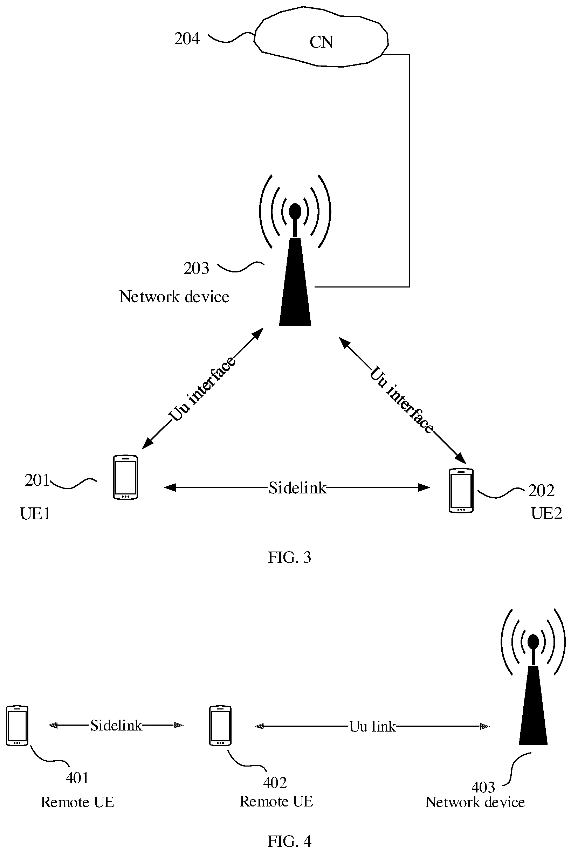

There is another important branch in cellular Internet of Things technologies, called direct communication. FIG. 3 is a schematic diagram of a solution for introducing direct communication. Referring to FIG. 3, direct communication refers to a method in which adjacent UEs may transmit data in a short range through a direct communication link (also called sidelink or PC5). For example, a UE1 (201) and a UE2 (202) may communicate directly through a sidelink link without passing through a network device (203). The radio interface corresponding to the sidelink link is called a direct communication interface (also called a sidelink interface or a PC5 interface).

In order to extend network coverage, it is considered to introduce a layer 2 (L2) relay. FIG. 4 is a schematic diagram of a solution for a relay existing between a user equipment (UE) device and a network device. Referring to FIG. 4, the L2 relay itself may be a UE with a relay function, such as a relay UE (402). For UE-to-Network relay (U2N Relay), an interface between a L2 relay and the network adopts a Uu interface, and an interface between the L2 relay and a relay UE (which may be referred to as a remote UE 401) adopts a direct communication interface (also called a sidelink interface or a PC5 interface).

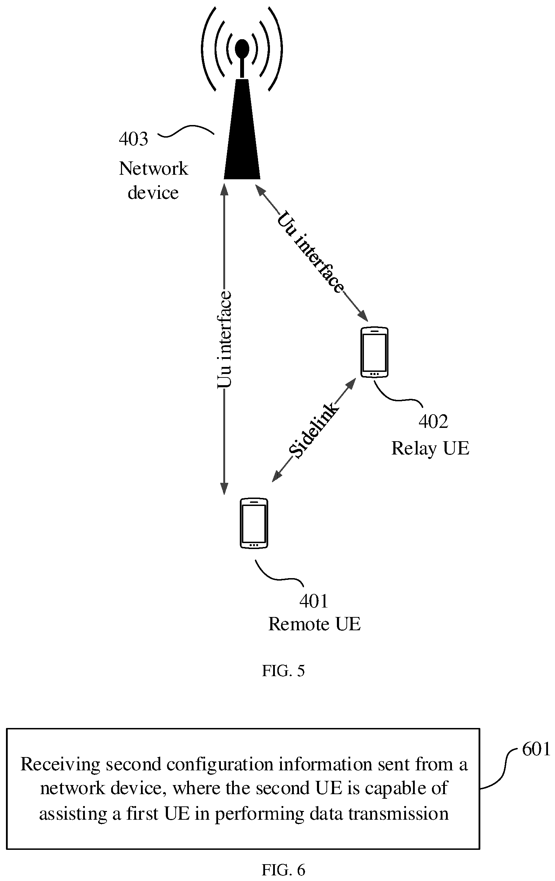

After introducing the U2N Relay, in order to improve a peak rate and/or reliability of a remote UE, a multi-path transmission mechanism may be considered, that is, the UE simultaneously accesses the network device through the Uu interface and the U2N Relay. FIG. 5 is a schematic diagram of a solution for multi-path transmission. Referring to FIG. 5, the remote UE (401) is connected to the relay UE (402) through the sidelink interface while accessing the network device 403 through the Uu interface, and then accesses the network device 403 through the relay UE (402).

By describing the above solutions, the multi-UE aggregation transmission described in the embodiments of the present application may be more clearly understood. UE aggregation transmission refers to one UE using other UEs to assist in performing data transmission. Its working mechanism is similar to the multi-path transmission mechanism implemented by the U2N Relay solution described above, and the difference is that in the UE aggregation transmission solution, a second UE cannot be selected arbitrarily, and only a specific UE may serve as the second UE.

In the U2N Relay solution, selection for the relay UE only considers a channel quality between the UE and the relay UE. However, this way for determining the relay UE is not suitable for the UE aggregation transmission solution. In a UE aggregation scenario, the aggregation UE cannot be selected based on the channel quality alone.

In the embodiment of the present application, the first UE determines the second UE based on an association relationship between the first UE and the second UE, and sends UE identification information of the second UE to the network device, so that the network device can configure the first UE and the second UE based on the first message sent from the first UE, thereby realizing the second UE assisting the first UE in performing data transmission.

According to the method for multi-UE aggregation transmission provided by an embodiment of the present application, determining the UE identification information of the second UE includes:
in case that multiple second UEs exist, selecting one or more second UEs from the multiple second UEs.

According to the method for multi-UE aggregation transmission provided by an embodiment of the present application, the second UE is determined by at least one of the following ways:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

In an embodiment, the association relationship between the first UE and the second UE may be pre-configured, or configured by operation administration and maintenance (OAM), or obtained by the first UE from the second UE. For example, some second UEs that can assist the first UE in performing data transmission are manually pre-configured for selection of the second UE. Alternatively, the OAM itself can realize functions such as monitoring link performance and ensuring normal operations of a network. The second UE that is capable of assisting the first UE in performing data transmission may be configured by the OAM. It can also be obtained from the second UE that may already communicate with the first UE through a direct link. For a communication link that has been established, the link performance can be evaluated by various traditional or future methods.

According to the method for multi-UE aggregation transmission provided by an embodiment of the present application, it further includes:
in case that the second UE is in an IDLE state or an INACTIVE state, sending indication information to the second UE, and triggering the second UE to enter a radio resource control (RRC) connected state.

In an embodiment, the association relationship between the first UE and the second UE may be obtained by the first UE from the second UE and also includes: in case that the second UE is in an IDLE/INACTIVE state, the first UE needs to trigger the second UE to enter an RRC connected state through an interface between the first UE and the second UE (which may be a non-standard interface), and then obtain the association relationship from the second UE.

According to the method for multi-UE aggregation transmission provided by an embodiment of the present application, the UE identification information of the second UE uniquely identifies the second UE in at least one of the following area ranges:
a cell;
a public land mobile network (PLMN); or
a global scope.

In an embodiment, the UE identification information of the second UE may be identification information that uniquely identifies a UE within a regional scope (such as a cell, or a PLMN, or a global scope). A unique identifier in a cell may be, for example, a cell radio network temporary identifier (C-RNTI), and a unique identifier in a global scope may be, for example, a 5G-S-TMSI, where S-TMSI is an abbreviation of system architecture evolution temporary mobile station identifier, and 5G-S-TMSI is a 48-bit bit string defined in TS 23.501. A unique identifier in the PLMN may be, for example, an international mobile subscriber identity (IMSI).

According to the method for multi-UE aggregation transmission provided by an embodiment of the present application, in case that the UE identification information uniquely identifies the second UE in a cell, the UE identification information of the second UE is a cell radio network temporary identifier (C-RNTI) and/or a cell identifier.

In an embodiment, in case that the UE identification information of the second UE uniquely identifies one UE within a range of a cell, the UE identification information of the second UE may be a C-RNTI, where the C-RNTI is a dynamic identifier assigned to the UE by the base station. The C-RNTI uniquely identifies one UE under a cell radio, and the C-RNTI is valid only for a UE in a connected state.

According to the method for multi-UE aggregation transmission provided by an embodiment of the present application, it further includes:
in case that the UE identification information is a C-RNTI and/or a cell identifier, receiving the UE identification information sent from the second UE in the RRC connected state.

In an embodiment, in case that the identification information of the second UE is a C-RNTI, after the second UE enters the RRC connected state, the second UE may inform the first UE of the identification information of the second UE through an interface between the first UE and the second UE (which may be a non-standard interface), that is, inform the first UE of a C-RNTI of the second UE.

According to the method for multi-UE aggregation transmission provided by an embodiment of the present application, it further includes:
receiving first configuration information sent from the network device, where the first configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the first UE and the network device;
a mapping relationship between an end-to-end bearer between the first UE and the network device and a Uu interface radio link control (RLC) bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol (PDCP) duplication transmission;
where the direct path is a transmission path for direct communication between the first UE and the network device; and the non-direct path is a transmission path between the first UE and the network device that needs to be forwarded through the second UE.

In an embodiment, after receiving the first message, the network device sends the first configuration information to the first UE, where the first configuration information at least includes one or more of the following contents:
an identifier and/or configuration information of an end-to-end bearer between the first UE and the network device;
a mapping relationship between an end-to-end bearer between the first UE and the network device and a Uu interface RLC logical channel between the first UE and the network device;
a mapping relationship between an end-to-end bearer between the first UE and the network device and a Uu interface RLC bearer between the first UE and the network device; or
indication information used to indicate whether an end-to-end adaptation layer exists between the first UE and the network device.

The mapping relationship described above may be for an uplink configuration only, or for a downlink configuration only, or for both uplink and downlink configurations.

According to the method for multi-UE aggregation transmission provided by an embodiment of the present application, the first message is carried in one of the following signalings:
a radio resource control (RRC) signaling; or
a medium access control (MAC) signaling.

In an embodiment, the first message may be carried by using an RRC signaling or a MAC signaling. In an embodiment, a relevant RRC/MAC signaling, such as a relevant UEAssistanceInformation signaling or other newly defined RRC/MAC signaling, may be used to carry the first message.

According to the method for multi-UE aggregation transmission provided by an embodiment of the present application, it further includes at least one of the following:
receiving first indication information sent from the network device through broadcasting, where the first indication information is used to indicate whether the network device supports multi-UE aggregation transmission; or
reporting second indication information to the network device through a UE capability reporting procedure, where the second indication information is used to indicate whether the first UE supports multi-UE aggregation transmission.

In an embodiment, before determining the UE identification information of the second UE and other steps, the indication information, sent from the receiving network device through broadcast, used to indicate whether the network device supports multi-UE aggregation transmission, is received. For example, 1 bit of indication information may be added to a system information block (SIB) to indicate whether the network device supports a multi-UE aggregation transmission scheme. Similar to receiving of the indication information broadcast by the network device indicating whether the network device supports multi-UE aggregation, the first UE reporting an indication information of whether multi-UE aggregation transmission is supported to the network device through the UE capability reporting procedure may also be an optional step.

The embodiments of the present application provide a method for multi-UE aggregation transmission, which is used to solve a problem of how to configure other UEs for assisting a UE in performing data transmission, and realize configuration of a second UE in a transmission scenario of multi-UE aggregation transmission. A method for multi-UE aggregation transmission performed by a second UE side will be described below. Those skilled in the art may understand that the method for multi-UE aggregation transmission performed at the second UE side corresponds to a method for multi-UE aggregation transmission performed at a first UE side, and may achieve corresponding effects.

FIG. 6 is a second schematic flowchart of a method for multi-user equipment (multi-UE) aggregation transmission according to an embodiment of the present application. Referring to FIG. 6, an embodiment of the present application provides a method for multi-user equipment (multi-UE) aggregation transmission, performed by a second UE device, such as a mobile phone, and the method includes the following steps.

Step 601: receiving second configuration information sent from a network device, where the second UE is capable of assisting a first UE in performing data transmission.

In an embodiment, after the network device receives the UE identification information of the second UE and determines the second UE, the network device sends the second configuration information to the second UE to configure parameters of UE aggregation transmission. A procedure of the first UE and the network device determining the second UE may be referred to embodiments of the method for multi-UE aggregation transmission performed at the first UE side.

According to the method for multi-UE aggregation transmission provided by an embodiment of the present application, the second configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the second UE and the network device;
a mapping relationship between an end-to-end bearer between the first UE and the network device and a Uu interface radio link control (RLC) bearer between the second UE and the network device; or
indication information used to indicate whether an adaptation layer exists between the second UE and the network device.

In an embodiment, after receiving the first message, the network device sends the second configuration information to the second UE, where the second configuration information at least includes one or more of the following contents:
an identifier and/or configuration information of an end-to-end bearer between the first UE and the network device;
a mapping relationship between an end-to-end bearer between the first UE and the network device and a Uu interface RLC logical channel between the second UE and the network device;
a mapping relationship between an end-to-end bearer between the first UE and the network device and a Uu interface RLC bearer between the second UE and the network device; or
indication information used to indicate whether an adaptation layer exists between the second UE and the network device.

The mapping relationship described above may be for an uplink configuration only, or for a downlink configuration only, or for both uplink and downlink configurations.

According to the method for multi-UE aggregation transmission provided by an embodiment of the present application, the second UE is determined by at least one of the following ways:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

According to the method for multi-UE aggregation transmission provided by an embodiment of the present application, it further includes:
in case that the second UE is in an IDLE state or an INACTIVE state, receiving indication information sent from the first UE, and triggering the second UE to enter a radio resource control (RRC) connected state.

According to the method for multi-UE aggregation transmission provided by an embodiment of the present application, the UE identification information of the second UE uniquely identifies the second UE in at least one of the following area ranges:
a cell;
a public land mobile network (PLMN); or
a global scope.

According to the method for multi-UE aggregation transmission provided by an embodiment of the present application, in case that the UE identification information uniquely identifies the second UE in a cell, the UE identification information of the second UE is a cell radio network temporary identifier (C-RNTI) and/or a cell identifier.

According to the method for multi-UE aggregation transmission provided by an embodiment of the present application, it further includes:
in case that the UE identification information is a C-RNTI and/or a cell identifier, sending the UE identification information to the first UE.

According to the method for multi-UE aggregation transmission provided by an embodiment of the present application, it further includes at least one of the following:
receiving first indication information sent from the network device through broadcasting, where the first indication information is used to indicate whether the network device supports multi-UE aggregation transmission; or
reporting third indication information to the network device through a UE capability reporting procedure, where the third indication information is used to indicate whether the second UE supports multi-UE aggregation transmission.

In an embodiment, similar to receiving of the indication information broadcast by the network device indicating whether the network device supports multi-UE aggregation, the second UE reporting an indication information of whether multi-UE aggregation transmission is supported to the network device through the UE capability reporting procedure may also be an optional step.

The embodiments of the present application provide a method for multi-UE aggregation transmission, which is used to solve a problem of how to configure other UEs for assisting a UE in performing data transmission, and realize configuration of a second UE in a transmission scenario of multi-UE aggregation transmission. A method for multi-UE aggregation transmission performed at a network device side will be described below. Those skilled in the art may understand that the method for multi-UE aggregation transmission performed at the network device side corresponds to a method for multi-UE aggregation transmission performed at the first UE side, and may achieve the corresponding effects.

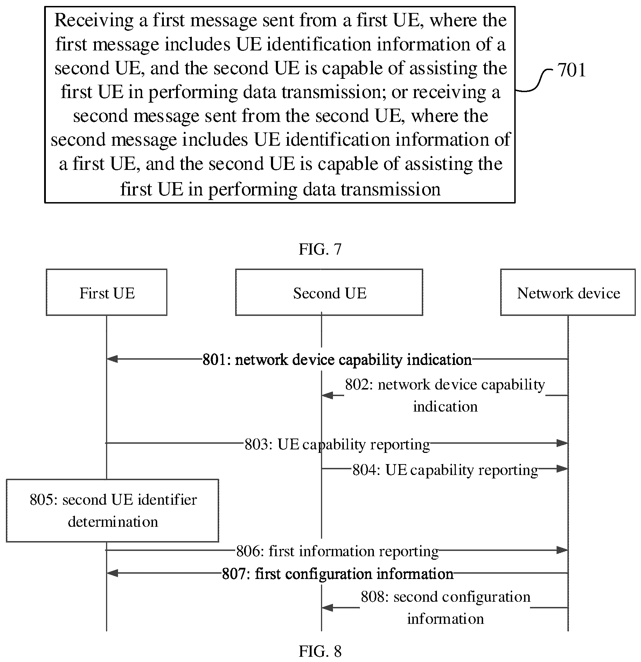

FIG. 7 is a third schematic flowchart of a method for multi-user equipment (multi-UE) aggregation transmission according to an embodiment of the present application. Referring to FIG. 7, an embodiment of the present application provides a method for multi-user equipment (multi-UE) aggregation transmission, performed by a network device such as a base station, and the method includes the following steps.

Step 701: receiving a first message sent from a first UE, where the first message includes UE identification information of a second UE, and the second UE is capable of assisting the first UE in performing data transmission; or
receiving a second message sent from a second UE, where the second message includes UE identification information of a first UE, and the second UE is capable of assisting the first UE in performing data transmission.

According to the method for multi-UE aggregation transmission provided by an embodiment of the present application, a way for determining the second UE includes:
in case that multiple second UEs exist, selecting one or more second UEs from the multiple second UEs.

According to the method for multi-UE aggregation transmission provided by an embodiment of the present application, it further includes at least one of the following:
sending first configuration information to the first UE based on the first message or the second message; or
sending second configuration information to the second UE based on the first message or the second message;
where the first configuration information includes at least one of the following:
   an identifier and/or configuration information of an end-to-end bearer between the first UE and the network device;
   a mapping relationship between an end-to-end bearer between the first UE and the network device and a Uu interface radio link control (RLC) logical channel between the first UE and the network device;
   a mapping relationship between an end-to-end bearer between the first UE and the network device and a Uu interface radio link control (RLC) bearer between the first UE and the network device;
   indication information used to indicate whether an end-to-end adaptation layer exists between the first UE and the network device;
   an identifier of an end-to-end bearer for the first UE that needs a second UE for assisting in performing data transmission;
   an identifier of an end-to-end bearer, among end-to-end bearers of the first UE, that needs to perform data transmission only through a non-direct path or only through a second UE;
   an identifier of an end-to-end bearer, among end-to-end bearers of the first UE, that needs to perform data transmission only through a direct path or only through the first UE; or
   an identifier of an end-to-end bearer for the first UE that needs to perform bearer allocation or packet data convergence protocol (PDCP) duplication transmission;
   where the direct path is a transmission path for direct communication between the first UE and the network device; and the non-direct path is a transmission path between the first UE and the network device that needs to be forwarded through the second UE; and
   where the second configuration information includes at least one of the following:
      an identifier and/or configuration information of an end-to-end bearer between the first UE and the network device;
      a mapping relationship between an end-to-end bearer between the first UE and the network device and a Uu interface radio link control (RLC) logical channel between the second UE and the network device;
      a mapping relationship between an end-to-end bearer between the first UE and the network device and a Uu interface radio link control (RLC) bearer between the second UE and the network device; or
      indication information used to indicate whether an adaptation layer exists between the second UE and the network device.

According to the method for multi-UE aggregation transmission provided by an embodiment of the present application, the first message or the second message is carried in one of the following signalings:
a radio resource control (RRC) signaling; or
a medium access control (MAC) signaling.

According to the method for multi-UE aggregation transmission provided by an embodiment of the present application, it further includes at least one of the following:
sending first indication information by broadcasting, where the first indication information is used to indicate whether the network device supports multi-UE aggregation transmission;
receiving second indication information reported from the first UE through a UE capability reporting procedure, where the second indication information is used to indicate whether the first UE supports multi-UE aggregation transmission; or
receiving third indication information reported from the second UE through a UE capability reporting procedure, where the third indication information is used to indicate whether the second UE supports multi-UE aggregation transmission.

The methods provided by various embodiments of the present application are based on the same application concept, and implementation of the methods performed at the UE device side and the network device side may be referred to each other, and repetitions will not be repeated.

The methods provided by the above embodiments of the present application are illustrated below through specific embodiments.

Embodiment 1: FIG. 8 is a first signaling interaction flowchart of a method for multi-user equipment (multi-UE) aggregation transmission according to an embodiment of the present application. Referring to FIG. 8, both a first UE and a second UE are in an RRC connected state. The signaling interaction of the method for multi-UE aggregation transmission provided by an embodiment of the present application includes the following steps.

Step 801: network device capability indication.

Step 802: network device capability indication.

In an embodiment, a network device sends indication information to the first UE and the second UE though broadcasting, and the indication information is used to indicate whether the network device supports multi-UE aggregation transmission. For example, 1 bit of indication information may be added to a system information block (SIB) to indicate whether the network device supports a multi-UE aggregation transmission scheme.

Step 803: UE capability reporting.

step 804: UE capability reporting.

In an embodiment, both the first UE and the second UE report the indication information to the network device through a UE capability reporting procedure, where the indication information is used to indicate whether the first UE and the second UE support multi-UE aggregation transmission.

Step 805: second UE identifier determination.

In an embodiment, the first UE determines the UE identification information of the second UE, and the first UE obtains the UE identification information of the second UE based on an association relationship between the first UE and the second UE. The association relationship between the first UE and the second UE may be pre-configured, or configured by OAM, or obtained by the first UE from the second UE (for example, through a non-standard interface). The UE identification information of the second UE may uniquely identify one UE within a regional scope (such as a cell, or a PLMN, or a global scope). For example, the UE identification information may be a C-RNTI, a 5G-S-TMSI, etc.

Step 806: first information reporting.

In an embodiment, after the first UE obtains the UE identification information of the second UE, the first UE sends a first message to the network device through an Uu interface to report the identification information of the second UE to the network device. The first message may be carried by a radio resource control (RRC) signaling or a medium access control (MAC) signaling. In an embodiment, a relevant RRC/MAC signaling, such as a relevant UEAssistanceInformation signaling or other newly defined RRC/MAC signaling, may be used to carry the first message.

Step 807: first configuration information.

Step 808: second configuration information.

The network device sends the first configuration information to the first UE and sends the second configuration information to the second UE. After receiving the first information reported by the first UE in step 806, the network device sends the first configuration information to the first UE, where the first configuration information at least includes one or more of the following:
an identifier and/or configuration information of an end-to-end bearer between the first UE and the network device;
a mapping relationship between an end-to-end bearer between the first UE and the network device and a Uu interface RLC logical channel between the first UE and the network device;
a mapping relationship between an end-to-end bearer between the first UE and the network device and a Uu interface RLC bearer between the first UE and the network device; or
indication information used to indicate whether an end-to-end adaptation layer exists between the first UE and the network device.

After receiving the first information reported by the first UE in step 806, the network device sends second configuration information to the second UE, where the second configuration information at least includes one or more of the following contents:
an identifier and/or configuration information of an end-to-end bearer between the first UE and the network device;
a mapping relationship between an end-to-end bearer between the first UE and the network device and a Uu interface RLC logical channel between the second UE and the network device;
a mapping relationship between an end-to-end bearer between the first UE and the network device and a Uu interface RLC bearer between the second UE and the network device; or
indication information used to indicate whether an adaptation layer exists between the second UE and the network device.

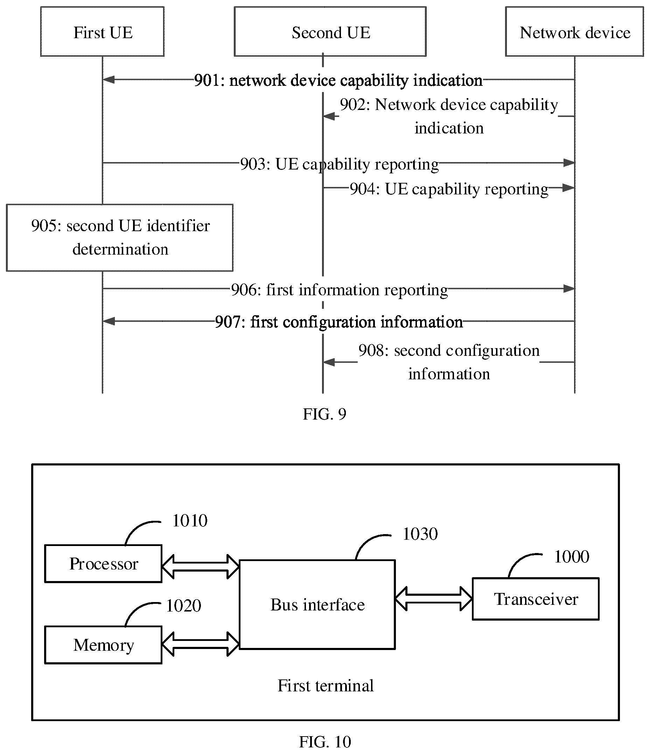

Embodiment 2: FIG. 9 is a second signaling interaction flowchart of a method for multi-user equipment (multi-UE) aggregation transmission according to an embodiment of the present application. Referring to FIG. 9, a first UE is in an RRC connected state, and a second UE is in an IDLE/INACTIVE state. The signaling interaction of the method for multi-UE aggregation transmission provided by an embodiment of the present application includes the following steps.

Step 901: network device capability indication.

Step 902: Network device capability indication.

In an embodiment, a network device sends indication information to the first UE and the second UE though broadcasting, and the indication information is used to indicate whether the network device supports multi-UE aggregation transmission. For example, 1 bit of indication information may be added to a system information block (SIB) to indicate whether the network device supports a multi-UE aggregation transmission scheme.

Step 903: UE capability reporting.

Step 904: UE capability reporting.

In an embodiment, the first UE and the second UE report the indication information to the network device through a UE capability reporting procedure, where the indication information is used to indicate whether the first UE and the second UE support multi-UE aggregation transmission.

Step 905: second UE identifier determination.

In an embodiment, after the first UE obtains the UE identification information of the second UE, the first UE sends a first message to the network device through an Uu interface to report the identification information of the second UE to the network device. The first message may be carried by a radio resource control (RRC) signaling or a medium access control (MAC) signaling. In an embodiment, a relevant RRC/MAC signaling, such as a relevant UEAssistanceInformation signaling or other newly defined RRC/MAC signaling, may be used to carry the first message.

At this time, the second UE is in an IDLE/INACTIVE state, and the first UE needs to trigger the second UE to enter an RRC connected state through an interface between the first UE and the second UE (which may be a non-standard interface).

In case that the UE identification information is a C-RNTI, after the second UE enters the RRC connected state, the identification information (such as a C-RNTI) of the second UE is notified to the first UE through an interface (which may be a non-standard interface) between the first UE and the second UE.

Step 906: first information reporting.

In an embodiment, after the first UE obtains the UE identification information of the second UE, the first UE sends a first message to the network device through an Uu interface to report the identification information of the second UE to the network device. The first message may be carried by a radio resource control (RRC) signaling or a medium access control (MAC) signaling. In an embodiment, a relevant RRC/MAC signaling, such as a relevant UEAssistanceInformation signaling or other newly defined RRC/MAC signaling, may be used to carry the first message.

Step 907: first configuration information.

Step 908: second configuration information.

The network device sends the first configuration information to the first UE and sends the second configuration information to the second UE. After receiving the first information reported by the first UE in step 806, the network device sends the first configuration information to the first UE, where the first configuration information at least includes one or more of the following:
an identifier and/or configuration information of an end-to-end bearer between the first UE and the network device;
a mapping relationship between an end-to-end bearer between the first UE and the network device and a Uu interface RLC logical channel between the first UE and the network device;
a mapping relationship between an end-to-end bearer between the first UE and the network device and a Uu interface RLC bearer between the first UE and the network device; or
indication information used to indicate whether an end-to-end adaptation layer exists between the first UE and the network device.

After receiving the first information reported by the first UE in step 806, the network device sends second configuration information to the second UE, where the second configuration information at least includes one or more of the following contents:
an identifier and/or configuration information of an end-to-end bearer between the first UE and the network device;
a mapping relationship between an end-to-end bearer between the first UE and the network device and a Uu interface RLC logical channel between the second UE and the network device;
a mapping relationship between an end-to-end bearer between the first UE and the network device and a Uu interface RLC bearer between the second UE and the network device; or
indication information used to indicate whether an adaptation layer exists between the second UE and the network device.

In the method for multi-UE aggregation transmission provided by the embodiment of the present application, one UE is allowed to use other UEs for assist in performing data transmission, thereby improving a peak rate of the UE and better meeting quality of service (QoS) requirements of a service.

FIG. 10 is a schematic structural diagram of a first user equipment (UE) according to an embodiment of the present application. As shown in FIG. 10, the first UE includes a memory 1020, a transceiver 1000 and a processor 1010,
where the memory 1020 is used for storing a computer program, the transceiver 1000 is used for receiving and sending data under control of the processor 1010, and the processor 1010 is used for reading the computer program in the memory 1020 and performing the following operations:
determining UE identification information of a second UE, where the second UE is capable of assisting the first UE in performing data transmission, and a quantity of second UEs is one or more; and
sending a first message to a network device, where the first message includes the UE identification information of the second UE.

In an embodiment, the transceiver 1000 is used for receiving and sending data under control of the processor 1010. In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. A bus interface 1030 provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing the operations.

The processor 1010 may be a central processing unit (CPU), an application specific integrated circuit (ASIC), a field programmable gate array (FPGA), or a complex programmable logic device (CPLD), and the processor 1010 may also adopt a multi-core architecture.

According to the first UE provided by an embodiment of the present application, determining the UE identification information of the second UE includes:
in case that multiple second UEs exist, selecting one or more second UEs from the multiple second UEs.

According to the first UE provided by an embodiment of the present application, the second UE is determined by at least one of the following ways:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

According to the first UE provided by an embodiment of the present application, the operations further include:
in case that the second UE is in an IDLE state or an INACTIVE state, sending indication information to the second UE, and triggering the second UE to enter a radio resource control (RRC) connected state.

According to the first UE provided by an embodiment of the present application, the UE identification information of the second UE uniquely identifies the second UE in at least one of the following area ranges:
a cell;
a public land mobile network (PLMN); or
a global scope.

According to the first UE provided by an embodiment of the present application, in case that the UE identification information uniquely identifies the second UE in a cell, the UE identification information of the second UE is a cell radio network temporary identifier (C-RNTI) and/or a cell identifier.

According to the first UE provided by an embodiment of the present application, the operations further include:
in case that the UE identification information is a C-RNTI and/or a cell identifier, receiving the UE identification information sent from the second UE in the RRC connected state.

According to the first UE provided by an embodiment of the present application, the operations further include:
receiving first configuration information sent from the network device, where the first configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the first UE and the network device;
a mapping relationship between an end-to-end bearer between the first UE and the network device and a Uu interface radio link control (RLC) bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol (PDCP) duplication transmission;
where the direct path is a transmission path for direct communication between the first UE and the network device; and the non-direct path is a transmission path between the first UE and the network device that needs to be forwarded through the second UE.

According to the first UE provided by an embodiment of the present application, the first message is carried in one of the following signalings:
a radio resource control (RRC) signaling; or
a medium access control (MAC) signaling.

According to the first UE provided by an embodiment of the present application, the operations further include at least one of the following:
receiving first indication information sent from the network device through broadcasting, where the first indication information is used to indicate whether the network device supports multi-UE aggregation transmission; or
reporting second indication information to the network device through a UE capability reporting procedure, where the second indication information is used to indicate whether the first UE supports multi-UE aggregation transmission.

It should be noted here that the above-mentioned first UE provided by the embodiment of the present application can implement all the method steps implemented by the method embodiment performed by the first UE, and may achieve same effects. The parts and beneficial effects of this embodiment that are the same as the method embodiment will not be described in detail here.

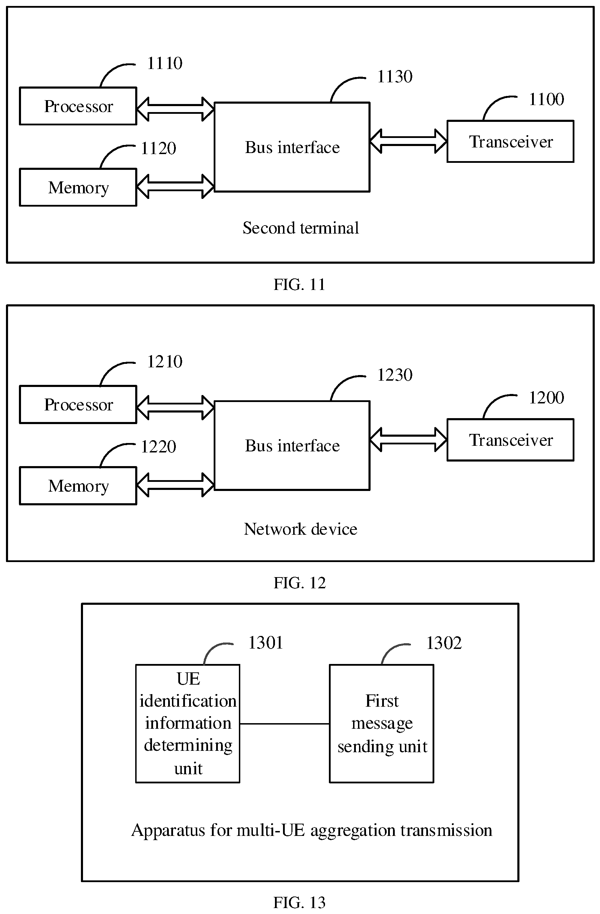

FIG. 11 is a schematic structural diagram of a second user equipment (UE) according to an embodiment of the present application. As shown in FIG. 11, the second UE includes a memory 1120, a transceiver 1100 and a processor 1110,
where the memory 1120 is used for storing a computer program, the transceiver 1100 is used for receiving and sending data under control of the processor 1110, and the processor 1110 is used for reading the computer program in the memory 1120 and performing the following operations:
receiving second configuration information sent from a network device, where the second UE is capable of assisting a first UE in performing data transmission.

In an embodiment, the transceiver 1100 is used for receiving and sending data under control of the processor 1110. In FIG. 11, a bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, etc., which are well known in the art, and therefore are not further described in the present application. A bus interface 1130 provides an interface. The transceiver 1100 may include multiple elements, i.e., including a transmitter and a receiver, units for providing communication with various other devices over transmission media including wireless channels, wired channels, fiber optic cables, and the like. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field programmable gate array (FPGA), or a complex programmable logic device (CPLD), and the processor 1110 may also adopt a multi-core architecture.

According to the second UE provided by an embodiment of the present application, the second configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the second UE and the network device;
a mapping relationship between an end-to-end bearer between the first UE and the network device and a Uu interface radio link control (RLC) bearer between the second UE and the network device; or
indication information used to indicate whether an adaptation layer exists between the second UE and the network device.

According to the second UE provided by an embodiment of the present application, the second UE is determined by at least one of the following ways:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

According to the second UE provided by an embodiment of the present application, the operations further include:
in case that the second UE is in an IDLE state or an INACTIVE state, receiving indication information sent from the first UE, and triggering the second UE to enter a radio resource control (RRC) connected state.

According to the second UE provided by an embodiment of the present application, the operations further include:
indicating UE identification information of the second UE to the first UE or sending a second message to the network device, where the second message includes UE identification information of the first UE.

According to the second UE provided by an embodiment of the present application, the UE identification information of the second UE uniquely identifies the second UE in at least one of the following area ranges:
a cell;
a public land mobile network (PLMN); or
a global scope.

According to the second UE provide by an embodiment of the present application, in case that the UE identification information uniquely identifies the second UE in a cell, the UE identification information of the second UE is a cell radio network temporary identifier (C-RNTI) and/or a cell identifier.

According to the second UE provided by an embodiment of the present application, the operations further include:
in case that the UE identification information is a C-RNTI and/or a cell identifier, sending the UE identification information to the first UE.

According to the second UE provided by an embodiment of the present application, the operations further include at least one of the following:
receiving first indication information sent from the network device through broadcasting, where the first indication information is used to indicate whether the network device supports multi-UE aggregation transmission; or
reporting third indication information to the network device through a UE capability reporting procedure, where the third indication information is used to indicate whether the second UE supports multi-UE aggregation transmission.

It should be noted here that the above-mentioned second UE provided by the embodiment of the present application can implement all the method steps implemented by the method embodiment performed by the second UE, and may achieve same effects. The parts and beneficial effects of this embodiment that are the same as the method embodiment will not be described in detail here.

FIG. 12 is a schematic structural diagram of a network device according to an embodiment of the present application. As shown in FIG. 12, the network device includes a memory 1220, a transceiver 1200 and a processor 1210,
where the memory 1220 is used for storing a computer program, the transceiver 1200 is used for receiving and sending data under control of the processor 1210, and the processor 1210 is used for reading the computer program in the memory 1220 and performing the following operations:
receiving a first message sent from a first user equipment (UE), where the first message includes UE identification information of a second UE, and the second UE is capable of assisting the first UE in performing data transmission; or
receiving a second message sent from a second UE, where the second message includes UE identification information of a first UE, and the second UE is capable of assisting the first UE in performing data transmission.

In an embodiment, the transceiver 1200 is used for receiving and sending data under control of the processor 1210. In FIG. 12, a bus architecture may include any number of interconnected buses and bridges, which are linked together through various circuits of one or more processors represented by the processor 1210 and one or more memories represented by the memory 1220. The bus architecture may also link together various other circuits, such as peripherals, voltage regulators, and power management circuits, etc., which are well known in the art, and therefore are not further described in the present application. A bus interface 1230 provides an interface. The transceiver 1200 may include multiple elements, i.e., including a transmitter and a receiver, units for providing communication with various other devices over transmission media including wireless channels, wired channels, fiber optic cables, and the like. The processor 1210 is responsible for managing the bus architecture and general processing, and the memory 1220 may store data used by the processor 1210 when performing operations.

The processor 1210 may be a central processing unit (CPU), an application specific integrated circuit (ASIC), a field programmable gate array (FPGA), or a complex programmable logic device (CPLD), and the processor 1210 may also adopt a multi-core architecture.

According to the network device provided by an embodiment of the present application, a way for determining the second UE includes:
in case that multiple second UEs exist, selecting one or more second UEs from the multiple second UEs.

According to the network device provided by an embodiment of the present application, the operations further include at least one of the following:
sending first configuration information to the first UE based on the first message or the second message; or
sending second configuration information to the second UE based on the first message or the second message;
where the first configuration information includes at least one of the following:
   an identifier and/or configuration information of an end-to-end bearer between the first UE and the network device;
   a mapping relationship between an end-to-end bearer between the first UE and the network device and a Uu interface radio link control (RLC) logical channel between the first UE and the network device;
   a mapping relationship between an end-to-end bearer between the first UE and the network device and a Uu interface radio link control (RLC) bearer between the first UE and the network device;
   indication information used to indicate whether an end-to-end adaptation layer exists between the first UE and the network device;
   an identifier of an end-to-end bearer for the first UE that needs a second UE for assisting in performing data transmission;
   an identifier of an end-to-end bearer, among end-to-end bearers of the first UE, that needs to perform data transmission only through a non-direct path or only through a second UE;
   an identifier of an end-to-end bearer, among end-to-end bearers of the first UE, that needs to perform data transmission only through a direct path or only through the first UE; or
   an identifier of an end-to-end bearer for the first UE that needs to perform bearer allocation or packet data convergence protocol (PDCP) duplication transmission;
   where the direct path is a transmission path for direct communication between the first UE and the network device; and the non-direct path is a transmission path between the first UE and the network device that needs to be forwarded through the second UE; and
   where the second configuration information includes at least one of the following:
      an identifier and/or configuration information of an end-to-end bearer between the first UE and the network device;
      a mapping relationship between an end-to-end bearer between the first UE and the network device and a Uu interface radio link control (RLC) logical channel between the second UE and the network device;
      a mapping relationship between an end-to-end bearer between the first UE and the network device and a Uu interface radio link control (RLC) bearer between the second UE and the network device; or
      indication information used to indicate whether an adaptation layer exists between the second UE and the network device.

According to the network device provided by an embodiment of the present application, the first message or the second message is carried in one of the following signalings:
a radio resource control (RRC) signaling; or
a medium access control (MAC) signaling.

According to the network device provided by an embodiment of the present application, the operations further include at least one of the following:
sending first indication information by broadcasting, where the first indication information is used to indicate whether the network device supports multi-UE aggregation transmission;
receiving second indication information reported from the first UE through a UE capability reporting procedure, where the second indication information is used to indicate whether the first UE supports multi-UE aggregation transmission; or
receiving third indication information reported from the second UE through a UE capability reporting procedure, where the third indication information is used to indicate whether the second UE supports multi-UE aggregation transmission.

It should be noted here that the above-mentioned network device provided by the embodiment of the present application can implement all the method steps implemented by the method embodiment performed by the network device, and may achieve same effects. The parts and beneficial effects of this embodiment that are the same as the method embodiment will not be described in detail here.

Embodiments of the present application provide methods and apparatuses for multi-user equipment (multi-UE) aggregation transmission, where the methods and the apparatuses are based on the same application concept. Since the methods and the apparatuses solve problems in similar principles, implementation of the apparatuses and the methods can be referred to each other, and the repetitions will not be repeated.

FIG. 13 is a first schematic structural diagram of an apparatus for multi-user equipment (multi-UE) aggregation transmission according to an embodiment of the present application. Referring to FIG. 13, the apparatus for multi-UE aggregation transmission provided by an embodiment of the present application is for use in a first UE side, including:
a UE identification information determining unit 1301, used for determining UE identification information of a second UE, where the second UE is capable of assisting a first UE in performing data transmission, and a quantity of second UEs is one or more; and
a first message sending unit 1302, used for sending a first message to a network device, where the first message includes the UE identification information of the second UE.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In an embodiment, the UE identification information determining unit is used for:
in case that multiple second UEs exist, selecting one or more second UEs from the multiple second UEs.

In an embodiment, the apparatus further includes: a second UE first determining unit, where the second UE first determining unit performs at least one of the following operations:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

In an embodiment, the apparatus for multi-UE aggregation transmission provided by an embodiment of the present application further includes:
an indication information first sending unit, used for, in case that the second UE is in an IDLE state or an INACTIVE state, sending indication information to the second UE, and triggering the second UE to enter a radio resource control (RRC) connected state.

In an embodiment, according to the apparatus for multi-UE aggregation transmission provided by an embodiment of the present application, the UE identification information of the second UE uniquely identifies the second UE in at least one of the following area ranges:
a cell;
a public land mobile network (PLMN); or
a global scope.

In an embodiment, according to the apparatus for multi-UE aggregation transmission provided by an embodiment of the present application, in case that the UE identification information uniquely identifies the second UE in a cell, the UE identification information of the second UE is a cell radio network temporary identifier (C-RNTI) and/or a cell identifier.

In an embodiment, the apparatus for multi-UE aggregation transmission provided by an embodiment of the present application further includes:
a UE identification information receiving unit, used for in case that the UE identification information is a C-RNTI and/or a cell identifier, receiving the UE identification information sent from the second UE in the RRC connected state.

In an embodiment, the apparatus for multi-UE aggregation transmission provided by an embodiment of the present application further includes:
a first configuration information receiving unit, used for receiving first configuration information sent from the network device, where the first configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the first UE and the network device;
a mapping relationship between an end-to-end bearer between the first UE and the network device and a Uu interface radio link control (RLC) bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol (PDCP) duplication transmission;
where the direct path is a transmission path for direct communication between the first UE and the network device; and the non-direct path is a transmission path between the first UE and the network device that needs to be forwarded through the second UE.

In an embodiment, according to the apparatus for multi-UE aggregation transmission provided by an embodiment of the present application, the first message is carried in one of the following signalings:
a radio resource control (RRC) signaling; or
a medium access control (MAC) signaling.

In an embodiment, the apparatus for multi-UE aggregation transmission provided by an embodiment of the present application further includes at least one of the following:
a first indication information first receiving unit, used for receiving first indication information sent from the network device through broadcasting, where the first indication information is used to indicate whether the network device supports multi-UE aggregation transmission; or
a second indication information reporting unit, used for reporting second indication information to the network device through a UE capability reporting procedure, where the second indication information is used to indicate whether the first UE supports multi-UE aggregation transmission.

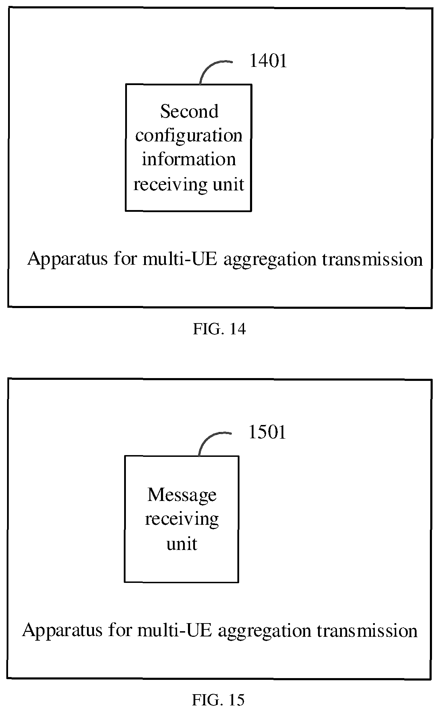

FIG. 14 is a second schematic structural diagram of an apparatus for multi-user equipment (multi-UE) aggregation transmission according to an embodiment of the present application. Referring to FIG. 14, the apparatus for multi-UE aggregation transmission provided by an embodiment of the present application is for use in a second UE side, including:
a second configuration information receiving unit 1401, used for receiving second configuration information sent from a network device, where a second UE is capable of assisting a first UE in performing data transmission.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In an embodiment, according to the apparatus for multi-UE aggregation transmission provided by an embodiment of the present application, the second configuration information includes at least one of the following:
an identifier and/or configuration information of an end-to-end bearer between the first UE and the network device;
a mapping relationship between an end-to-end bearer between the first UE and the network device and a Uu interface radio link control (RLC) logical channel between the second UE and the network device;
a mapping relationship between an end-to-end bearer between the first UE and the network device and a Uu interface radio link control (RLC) bearer between the second UE and the network device; or
indication information used to indicate whether an adaptation layer exists between the second UE and the network device.

In an embodiment, the apparatus for multi-UE aggregation transmission provided by an embodiment of the present application further includes: a second UE second determining unit, where the second UE second determining unit performs at least one of the following operations:
the second UE is determined based on a pre-configured association relationship between the first UE and the second UE;
the second UE is determined based on an association relationship between the first UE and the second UE configured by operation administration and maintenance (OAM); or
the second UE is determined based on an association relationship between the first UE and the second UE sent from the second UE to the first UE.

In an embodiment, the apparatus for multi-UE aggregation transmission provided by an embodiment of the present application further includes:
an indication information sending second unit, used for, in case that the second UE is in an IDLE state or an INACTIVE state, receiving indication information sent from the first UE, and triggering the second UE to enter a radio resource control (RRC) connected state.

In an embodiment, the apparatus for multi-UE aggregation transmission provided by an embodiment of the present application further includes:
a second message sending unit, used for indicating UE identification information of the second UE to the first UE or sending a second message to the network device, where the second message includes UE identification information of the first UE.

In an embodiment, according to the apparatus for multi-UE aggregation transmission provided by an embodiment of the present application, the UE identification information of the second UE uniquely identifies the second UE in at least one of the following area ranges:
a cell;
a public land mobile network (PLMN); or
a global scope.

In an embodiment, according to the apparatus for multi-UE aggregation transmission provided by an embodiment of the present application, in case that the UE identification information uniquely identifies the second UE in a cell, the UE identification information of the second UE is a cell radio network temporary identifier (C-RNTI) and/or a cell identifier.

In an embodiment, the apparatus for multi-UE aggregation transmission provided by an embodiment of the present application further includes:
a UE identification information sending unit, used for, in case that the UE identification information is a C-RNTI and/or a cell identifier, sending the UE identification information to the first UE.

In an embodiment, the apparatus for multi-UE aggregation transmission provided by an embodiment of the present application further includes at least one of the following:
a first indication information second receiving unit, used for receiving first indication information sent from the network device through broadcasting, where the first indication information is used to indicate whether the network device supports multi-UE aggregation transmission; or
a third indication information reporting unit, used for reporting third indication information to the network device through a UE capability reporting procedure, where the third indication information is used to indicate whether the second UE supports multi-UE aggregation transmission.

FIG. 15 is a third schematic structural diagram of an apparatus for multi-user equipment (multi-UE) aggregation transmission according to an embodiment of the present application. Referring to FIG. 15, the apparatus for multi-UE aggregation transmission provided by an embodiment of the present application is for use in a network device, including:
a message receiving unit 1501, used for receiving a first message sent from a first UE, where the first message includes UE identification information of a second UE, and the second UE is capable of assisting the first UE in performing data transmission; or
receiving a second message sent from a second UE, where the second message includes UE identification information of a first UE, and the second UE is capable of assisting the first UE in performing data transmission.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In an embodiment, the apparatus for multi-UE aggregation transmission provided by an embodiment of the present application further includes:
a second UE third determining unit, used for, in case that multiple second UEs exist, selecting one or more second UEs from the multiple second UEs.

In an embodiment, the apparatus for multi-UE aggregation transmission provided by an embodiment of the present application further includes: a first configuration information sending unit, where the first configuration information sending unit is used for performing at least one of the following:
sending first configuration information to the first UE based on the first message or the second message; or
sending second configuration information to the second UE based on the first message or the second message;
where the first configuration information includes at least one of the following:
   an identifier of an end-to-end bearer and/or configuration information between the first UE and a network device;
   a mapping relationship between an end-to-end bearer between the first UE and a network device and a Uu interface radio link control (RLC) logical channel between the first UE and the network device;
   a mapping relationship between an end-to-end bearer between the first UE and a network device and a Uu interface radio link control (RLC) bearer between the first UE and the network device;
   indication information used to indicate whether an end-to-end adaptation layer exists between the first UE and a network device;
   an identifier of an end-to-end bearer for the first UE that needs a second UE for assisting in performing data transmission;
   an identifier of an end-to-end bearer, among end-to-end bearers of the first UE, that needs to perform data transmission only through a non-direct path or only through a second UE;
   an identifier of an end-to-end bearer, among end-to-end bearers of the first UE, that needs to perform data transmission only through a direct path or only through the first UE; or
   an identifier of an end-to-end bearer for the first UE that needs to perform bearer allocation or packet data convergence protocol (PDCP) duplication transmission;
   where the direct path is a transmission path for direct communication between the first UE and the network device; and the non-direct path is a transmission path between the first UE and the network device that needs to be forwarded through the second UE; and
   where the second configuration information includes at least one of the following:
      an identifier and/or configuration information of an end-to-end bearer between the first UE and the network device;
      a mapping relationship between an end-to-end bearer between the first UE and the network device and a Uu interface radio link control (RLC) logical channel between the second UE and the network device;
      a mapping relationship between an end-to-end bearer between the first UE and the network device and a Uu interface radio link control (RLC) bearer between the second UE and the network device; or
      indication information used to indicate whether an adaptation layer exists between the second UE and the network device.

In an embodiment, according to the apparatus for multi-UE aggregation transmission provided by an embodiment of the present application, the first message or the second message is carried in one of the following signalings:
a radio resource control (RRC) signaling; or
a medium access control (MAC) signaling.

In an embodiment, the apparatus for multi-UE aggregation transmission provided by an embodiment of the present application further includes at least one of the following:
a first indication information sending unit, used for sending first indication information by broadcasting, where the first indication information is used to indicate whether the network device supports multi-UE aggregation transmission;
a second indication information receiving unit, used for receiving second indication information reported from the first UE through a UE capability reporting procedure, where the second indication information is used to indicate whether the first UE supports multi-UE aggregation transmission; or
a third indication information receiving unit, used for receiving third indication information reported from the second UE through a UE capability reporting procedure, where the third indication information is used to indicate whether the second UE supports multi-UE aggregation transmission.

An embodiment of the present application further provides a processor-readable storage medium, where the processor-readable storage medium stores a computer program, and the computer program is used to cause a processor to perform the method for multi-UE aggregation transmission provided by the above embodiments.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for multi-user equipment, multi-UE, aggregation transmission, performed by a first UE, comprising:
determining UE identification information of a second UE, wherein the second UE is capable of assisting the first UE in performing data transmission, and a quantity of second UEs is one or more; and
sending a first message to a network device, wherein the first message comprises the UE identification information of the second UE.

2. The method of claim 1, wherein determining the UE identification information of the second UE comprises:
in case that multiple second UEs exist, selecting one or more second UEs from the multiple second UEs.

3. The method of claim 1, wherein the second UE is determined by at least one of the following ways:
the second UE is determined based on a pre-configured association relationship between the first UE and the second UE;
the second UE is determined based on an association relationship between the first UE and the second UE configured by operation administration and maintenance, OAM; or
the second UE is determined based on an association relationship between the first UE and the second UE sent from the second UE to the first UE.

4. The method of claim 3, further comprising:
in case that the second UE is in an IDLE state or an INACTIVE state, sending indication information to the second UE, and triggering the second UE to enter a radio resource control, RRC, connected state.

5. The method of claim 4, wherein the UE identification information of the second UE uniquely identifies the second UE in at least one of the following area ranges:
a cell;
a public land mobile network, PLMN; or
a global scope.

6. The method of claim 5, wherein in case that the UE identification information uniquely identifies the second UE in a cell, the UE identification information of the second UE is a cell radio network temporary identifier, C-RNTI, and/or a cell identifier.

7. The method of claim 6, further comprising:
in case that the UE identification information is a C-RNTI and/or a cell identifier, receiving the UE identification information sent from the second UE in the RRC connected state.

8. The method of claim 1, further comprising:
receiving first configuration information sent from the network device, wherein the first configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the first UE and the network device;
a mapping relationship between an end-to-end bearer between the first UE and the network device and a Uu interface radio link control, RLC, bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers for the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol, PDCP, duplication transmission;
wherein the direct path is a transmission path for direct communication between the first UE and the network device; and the non-direct path is a transmission path between the first UE and the network device that needs to be forwarded through the second UE.

9. The method of claim 1, wherein the first message is carried in one of the following signalings:
a radio resource control, RRC, signaling; or
a medium access control, MAC, signaling.

10. The method of claim 1, further comprising at least one of the following:
receiving first indication information sent from the network device through broadcasting, wherein the first indication information is used to indicate whether the network device supports multi-UE aggregation transmission; or
reporting second indication information to the network device through a UE capability reporting procedure, wherein the second indication information is used to indicate whether the first UE supports multi-UE aggregation transmission.

11. A method for multi-user equipment, multi-UE, aggregation transmission, performed by a second UE, comprising:
receiving second configuration information sent from a network device, wherein the second UE is capable of assisting a first UE in performing data transmission.

12. The method of claim 11, wherein the second configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the second UE and the network device;
a mapping relationship between an end-to-end bearer between the first UE and the network device and a Uu interface radio link control, RLC, bearer between the second UE and the network device; or
indication information used to indicate whether an adaptation layer exists between the second UE and the network device.

13. The method of claim 11, wherein the second UE is determined by at least one of the following ways:
the second UE is determined based on a pre-configured association relationship between the first UE and the second UE;
the second UE is determined based on an association relationship between the first UE and the second UE configured by operation administration and maintenance, OAM; or
the second UE is determined based on an association relationship between the first UE and the second UE sent from the second UE to the first UE.

14. The method of claim 11, further comprising:
in case that the second UE is in an IDLE state or an INACTIVE state, receiving indication information sent from the first UE, and triggering the second UE to enter a radio resource control, RRC, connected state.

15. The method of claim 14, further comprising:
indicating UE identification information of the second UE to the first UE or sending a second message to the network device, wherein the second message comprises UE identification information of the first UE.

16. The method of claim 15, wherein the UE identification information of the second UE uniquely identifies the second UE in at least one of the following area ranges:
a cell;
a public land mobile network, PLMN; or
a global scope.

17. The method of claim 16, wherein in case that the UE identification information uniquely identifies the second UE in a cell, the UE identification information of the second UE is a cell radio network temporary identifier, C-RNTI, and/or a cell identifier.

18. The method of claim 17, further comprising:
in case that the UE identification information is a C-RNTI and/or a cell identifier, sending the UE identification information to the first UE.

19. The method of claim 11, further comprising at least one of the following:
receiving first indication information sent from the network device through broadcasting, wherein the first indication information is used to indicate whether the network device supports multi-UE aggregation transmission; or
reporting third indication information to the network device through a UE capability reporting procedure, wherein the third indication information is used to indicate whether the second UE supports multi-UE aggregation transmission.

20. A method for multi-user equipment, multi-UE, aggregation transmission, performed by a network device, comprising:
receiving a first message sent from a first UE, wherein the first message comprises UE identification information of a second UE, and the second UE is capable of assisting the first UE in performing data transmission; or
receiving a second message sent from a second UE, wherein the second message comprises UE identification information of a first UE, and the second UE is capable of assisting the first UE in performing data transmission.

21. The method of claim 20, wherein a way for determining the second UE comprises:
in case that multiple second UEs exist, selecting one or more second UEs from the multiple second UEs.

22. The method of claim 20, further comprising at least one of the following:
sending first configuration information to the first UE based on the first message or the second message; or
sending second configuration information to the second UE based on the first message or the second message;
wherein the first configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the first UE and the network device;
a mapping relationship between an end-to-end bearer between the first UE and the network device and a Uu interface radio link control, RLC, bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol, PDCP, duplication transmission;
wherein the direct path is a transmission path for direct communication between the first UE and the network device; and the non-direct path is a transmission path between the first UE and the network device that needs to be forwarded through the second UE; and
wherein the second configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the second UE and the network device;
a mapping relationship between an end-to-end bearer between the first UE and the network device and a Uu interface radio link control, RLC, bearer between the second UE and the network device; or
indication information used to indicate whether an adaptation layer exists between the second UE and the network device.

23. The method of claim 20, wherein the first message or the second message is carried in one of the following signalings:
a radio resource control, RRC, signaling; or
a medium access control, MAC, signaling.

24. The method of claim 20, further comprising at least one of the following:
sending first indication information by broadcasting, wherein the first indication information is used to indicate whether the network device supports multi-UE aggregation transmission;
receiving second indication information reported from the first UE through a UE capability reporting procedure, wherein the second indication information is used to indicate whether the first UE supports multi-UE aggregation transmission; or
receiving third indication information reported from the second UE through a UE capability reporting procedure, wherein the third indication information is used to indicate whether the second UE supports multi-UE aggregation transmission.

25. A first user equipment, UE, comprising a memory, a transceiver and a processor,
wherein the memory is used for storing a computer program, the transceiver is used for receiving and sending data under control of the processor, and the processor is used for reading the computer program in the memory and performing the following operations:
determining UE identification information of a second UE, wherein the second UE is capable of assisting the first UE in performing data transmission, and a quantity of second UEs is one or more; and
sending a first message to a network device, wherein the first message comprises the UE identification information of the second UE.

26. The first UE of claim 25, wherein determining the UE identification information of the second UE comprises:
in case that multiple second UEs exist, selecting one or more second UEs from the multiple second UEs.

27. The first UE of claim 25, wherein the second UE is determined by at least one of the following ways:
the second UE is determined based on a pre-configured association relationship between the first UE and the second UE;
the second UE is determined based on an association relationship between the first UE and the second UE configured by operation administration and maintenance, OAM; or
the second UE is determined based on an association relationship between the first UE and the second UE sent from the second UE to the first UE.

28. The first UE of claim 25, the operations further comprise:
in case that the second UE is in an IDLE state or an INACTIVE state, sending indication information to the second UE, and triggering the second UE to enter a radio resource control, RRC, connected state.

29. The first UE of claim 28, wherein the UE identification information of the second UE uniquely identifies the second UE in at least one of the following area ranges:
a cell;
a public land mobile network, PLMN; or
a global scope.

30. The first UE of claim 29, wherein in case that the UE identification information uniquely identifies the second UE in a cell, the UE identification information of the second UE is a cell radio network temporary identifier, C-RNTI, and/or a cell identifier.

31. The first UE of claim 30, wherein the operations further comprise:
in case that the UE identification information is a C-RNTI and/or a cell identifier, receiving the UE identification information sent from the second UE in the RRC connected state.

32. The first UE of claim 25, wherein the operations further comprise:
receiving first configuration information sent from the network device, wherein the first configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the first UE and the network device;
a mapping relationship between an end-to-end bearer between the first UE and the network device and a Uu interface radio link control, RLC, bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol, PDCP, duplication transmission;
wherein the direct path is a transmission path for direct communication between the first UE and the network device; and the non-direct path is a transmission path between the first UE and the network device that needs to be forwarded through the second UE.

33. The first UE of claim 25, wherein the first message is carried in one of the following signalings:
a radio resource control, RRC, signaling; or
a medium access control, MAC, signaling.

34. The first UE of claim 25, wherein the operations further comprise at least one of the following:
receiving first indication information sent from the network device through broadcasting, wherein the first indication information is used to indicate whether the network device supports multi-UE aggregation transmission; or
reporting second indication information to the network device through a UE capability reporting procedure, wherein the second indication information is used to indicate whether the first UE supports multi-UE aggregation transmission.

35. A second user equipment, UE, comprising a memory, a transceiver and a processor, wherein the memory is used for storing a computer program, the transceiver is used for receiving and sending data under control of the processor, and the processor is used for reading the computer program in the memory and performing the following operations:
receiving second configuration information sent from a network device, wherein the second UE is capable of assisting a first UE in performing data transmission.

36. The second UE of claim 35, wherein the second configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the second UE and the network device;
a mapping relationship between an end-to-end bearer between the first UE and the network device and a Uu interface radio link control, RLC, bearer between the second UE and the network device; or
indication information used to indicate whether an adaptation layer exists between the second UE and the network device.

37. The second UE of claim 35, wherein the second UE is determined by at least one of the following ways:
the second UE is determined based on a pre-configured association relationship between the first UE and the second UE;
the second UE is determined based on an association relationship between the first UE and the second UE configured by operation administration and maintenance, OAM; or
the second UE is determined based on an association relationship between the first UE and the second UE sent from the second UE to the first UE.

38. The second UE of claim 35, wherein the operations further comprise:
in case that the second UE is in an IDLE state or an INACTIVE state, receiving indication information sent from the first UE, and triggering the second UE to enter a radio resource control, RRC, connected state.

39. The second UE of claim 38, wherein the operations further comprise:
indicating UE identification information of the second UE to the first UE or sending a second message to the network device, wherein the second message comprises UE identification information of the first UE.

40. The second UE of claim 39, wherein the UE identification information of the second UE uniquely identifies the second UE in at least one of the following area ranges:
a cell;
a public land mobile network, PLMN; or
a global scope.

41. The second UE of claim 40, wherein in case that the UE identification information uniquely identifies the second UE in a cell, the UE identification information of the second UE is a cell radio network temporary identifier, C-RNTI, and/or a cell identifier.

42. The second UE of claim 41, wherein the operations further comprise:
in case that the UE identification information is a C-RNTI and/or a cell identifier, sending the UE identification information to the first UE.

43. The second UE of claim 35, wherein the operations further comprise at least one of the following:
receiving first indication information sent from the network device through broadcasting, wherein the first indication information is used to indicate whether the network device supports multi-UE aggregation transmission; or
reporting third indication information to the network device through a UE capability reporting procedure, wherein the third indication information is used to indicate whether the second UE supports multi-UE aggregation transmission.

44. A network device comprises a memory, a transceiver and a processor,
wherein the memory is used for storing a computer program, the transceiver is used for receiving and sending data under control of the processor, and the processor is used for reading the computer program in the memory and performing the following operations:
receiving a first message sent from a first user equipment, UE, wherein the first message comprises UE identification information of a second UE, and the second UE is capable of assisting the first UE in performing data transmission; or
receiving a second message sent from a second UE, wherein the second message comprises UE identification information of a first UE, and the second UE is capable of assisting the first UE in performing data transmission.

45. The network device of claim 44, wherein a way for determining the second UE comprises:
in case that multiple second UEs exist, selecting one or more second UEs from the multiple second UEs.

46. The network device of claim 44, wherein the operations further comprise at least one of the following:
sending first configuration information to the first UE based on the first message or the second message; or
sending second configuration information to the second UE based on the first message or the second message;
wherein the first configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the first UE and the network device;
a mapping relationship between an end-to-end bearer between the first UE and the network device and a Uu interface radio link control, RLC, bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol, PDCP, duplication transmission;
wherein the direct path is a transmission path for direct communication between the first UE and the network device; and the non-direct path is a transmission path between the first UE and the network device that needs to be forwarded through the second UE; and
wherein the second configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the second UE and the network device;
a mapping relationship between an end-to-end bearer between the first UE and the network device and a Uu interface radio link control, RLC, bearer between the second UE and the network device; or
indication information used to indicate whether an adaptation layer exists between the second UE and the network device.

47. The network device of claim 44, wherein the first message or the second message is carried in one of the following signaling:
a radio resource control, RRC, signaling; or
a medium access control, MAC, signaling.

48. The network device of claim 44, wherein the operations further comprise at least one of the following:
sending first indication information by broadcasting, wherein the first indication information is used to indicate whether the network device supports multi-UE aggregation transmission;
receiving second indication information reported from the first UE through a UE capability reporting procedure, wherein the second indication information is used to indicate whether the first UE supports multi-UE aggregation transmission; or
receiving third indication information reported from the second UE through a UE capability reporting procedure, wherein the third indication information is used to indicate whether the second UE supports multi-UE aggregation transmission.

49. An apparatus for multi-user equipment, multi-UE, aggregation transmission, comprising:
a UE identification information determining unit, used for determining UE identification information of a second UE, wherein the second UE is capable of assisting a first UE in performing data transmission, and a quantity of second UEs is one or more; and
a first message sending unit, used for sending a first message to a network device, wherein the first message comprises the UE identification information of the second UE.

50. The apparatus of claim 49, wherein the UE identification information determining unit is used for:
in case that multiple second UEs exist, selecting one or more second UEs from the multiple second UEs.

51. The apparatus of claim 49, wherein the apparatus further comprises: a second UE first determining unit, wherein the second UE first determining unit performs at least one of the following operations:
the second UE is determined based on a pre-configured association relationship between the first UE and the second UE;
the second UE is determined based on an association relationship between the first UE and the second UE configured by operation administration and maintenance, OAM; or
the second UE is determined based on an association relationship between the first UE and the second UE sent from the second UE to the first UE.

52. The apparatus of claim 51, further comprising:
an indication information first sending unit, used for, in case that the second UE is in an IDLE state or an INACTIVE state, sending indication information to the second UE, and triggering the second UE to enter a radio resource control, RRC, connected state.

53. The apparatus of claim 52, wherein the UE identification information of the second UE uniquely identifies the second UE in at least one of the following area ranges:
a cell;
a public land mobile network, PLMN; or
a global scope.

54. The apparatus of claim 53, wherein in case that the UE identification information uniquely identifies the second UE in a cell, the UE identification information of the second UE is a cell radio network temporary identifier, C-RNTI, and/or a cell identifier.

55. The apparatus of claim 54, further comprising:
a UE identification information receiving unit, used for in case that the UE identification information is a C-RNTI and/or a cell identifier, receiving the UE identification information sent from the second UE in the RRC connected state.

56. The apparatus of claim 49, further comprising:
a first configuration information receiving unit, used for receiving first configuration information sent from the network device, wherein the first configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the first UE and the network device;
a mapping relationship between an end-to-end bearer between the first UE and the network device and a Uu interface radio link control, RLC, bearer between the first UE and the network device;
indication information used to indicate whether an end-to-end adaptation layer exists between the first UE and the network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol, PDCP, duplication transmission;
wherein the direct path is a transmission path for direct communication between the first UE and the network device; and the non-direct path is a transmission path between the first UE and the network device that needs to be forwarded through the second UE.

57. The apparatus of claim 49, wherein the first message is carried in one of the following signalings:
a radio resource control, RRC, signaling; or
a medium access control, MAC, signaling.

58. The apparatus of claim 49, further comprising at least one of the following:
a first indication information first receiving unit, used for receiving first indication information sent from the network device through broadcasting, wherein the first indication information is used to indicate whether the network device supports multi-UE aggregation transmission; or
a second indication information reporting unit, used for reporting second indication information to the network device through a UE capability reporting procedure, wherein the second indication information is used to indicate whether the first UE supports multi-UE aggregation transmission.

59. An apparatus for multi-user equipment, multi-UE, aggregation transmission, comprising:
a second configuration information receiving unit, used for receiving second configuration information sent from a network device, wherein a second UE is capable of assisting a first UE in performing data transmission.

60. The apparatus of claim 59, wherein the second configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the second UE and the network device;
a mapping relationship between an end-to-end bearer between the first UE and the network device and a Uu interface radio link control, RLC, bearer between the second UE and the network device; or
indication information used to indicate whether an adaptation layer exists between the second UE and the network device.

61. The apparatus of claim 59, further comprising: a second UE second determining unit, wherein the second UE second determining unit performs at least one of the following operations:
the second UE is determined based on a pre-configured association relationship between the first UE and the second UE;
the second UE is determined based on an association relationship between the first UE and the second UE configured by operation administration and maintenance, OAM; or
the second UE is determined based on an association relationship between the first UE and the second UE sent from the second UE to the first UE.

62. The apparatus of claim 59, further comprising:
an indication information sending second unit, used for, in case that the second UE is in an IDLE state or an INACTIVE state, receiving indication information sent from the first UE, and triggering the second UE to enter a radio resource control, RRC, connected state.

63. The apparatus of claim 62, further comprising:
a second message sending unit, used for indicating UE identification information of the second UE to the first UE or sending a second message to the network device, wherein the second message comprises UE identification information of the first UE.

64. The apparatus of claim 63, wherein the UE identification information of the second UE uniquely identifies the second UE in at least one of the following area ranges:
a cell;
a public land mobile network, PLMN; or
a global scope.

65. The apparatus of claim 64, wherein in case that the UE identification information uniquely identifies the second UE in a cell, the UE identification information of the second UE is a cell radio network temporary identifier, C-RNTI, and/or a cell identifier.

66. The apparatus of claim 65, further comprising:
a UE identification information sending unit, used for, in case that the UE identification information is a C-RNTI and/or a cell identifier, sending the UE identification information to the first UE.

67. The apparatus of claim 59, further comprising at least one of the following:
a first indication information second receiving unit, used for receiving first indication information sent from the network device through broadcasting, wherein the first indication information is used to indicate whether the network device supports multi-UE aggregation transmission; or
a third indication information reporting unit, used for reporting third indication information to the network device through a UE capability reporting procedure, wherein the third indication information is used to indicate whether the second UE supports multi-UE aggregation transmission.

68. An apparatus for multi-user equipment, multi-UE, aggregation transmission, comprising:
a message receiving unit, used for receiving a first message sent from a first UE, wherein the first message comprises UE identification information of a second UE, and the second UE is capable of assisting the first UE in performing data transmission; or
receiving a second message sent from a second UE, wherein the second message comprises UE identification information of a first UE, and the second UE is capable of assisting the first UE in performing data transmission.

69. The apparatus of claim 68, further comprising:
a second UE third determining unit, used for, in case that multiple second UEs exist, selecting one or more second UEs from the multiple second UEs.

70. The apparatus of claim 68, further comprising: a first configuration information sending unit, wherein the first configuration information sending unit is used for performing at least one of the following:
sending first configuration information to the first UE based on the first message or the second message; or
sending second configuration information to the second UE based on the first message or the second message;
wherein the first configuration information comprises at least one of the following:
an identifier of an end-to-end bearer and/or configuration information between the first UE and a network device;
a mapping relationship between an end-to-end bearer between the first UE and a network device and a Uu interface radio link control, RLC, logical channel between the first UE and the network device;
a mapping relationship between an end-to-end bearer between the first UE and a network device and a Uu interface radio link control, RLC, bearer between the first UE and the network device;
indication information used to indicate whether an end-to-end adaptation layer exists between the first UE and a network device;
an identifier of an end-to-end bearer for the first UE that needs a second UE for assisting in performing data transmission;
an identifier of an end-to-end bearer, among end-to-end bearers of the first UE, that needs to perform data transmission only through a non-direct path or only through a second UE;
an identifier of an end-to-end bearer, among end-to-end bearers of the first UE, that needs to perform data transmission only through a direct path or only through the first UE; or
an identifier of an end-to-end bearer for the first UE that needs to perform bearer allocation or packet data convergence protocol, PDCP, duplication transmission;
wherein the direct path is a transmission path for direct communication between the first UE and the network device; and the non-direct path is a transmission path between the first UE and the network device that needs to be forwarded through the second UE; and
wherein the second configuration information comprises at least one of the following:
an identifier and/or configuration information of an end-to-end bearer between the first UE and the network device;
a mapping relationship between an end-to-end bearer between the first UE and the network device and a Uu interface radio link control, RLC, logical channel between the second UE and the network device;
a mapping relationship between an end-to-end bearer between the first UE and the network device and a Uu interface radio link control, RLC, bearer between the second UE and the network device; or
indication information used to indicate whether an adaptation layer exists between the second UE and the network device.

71. The apparatus of claim 68, wherein the first message or the second message is carried in one of the following signalings:
a radio resource control, RRC, signaling; or
a medium access control, MAC, signaling.

72. The apparatus of claim 68, further comprising at least one of the following:
a first indication information sending unit, used for sending first indication information by broadcasting, wherein the first indication information is used to indicate whether the network device supports multi-UE aggregation transmission;
a second indication information receiving unit, used for receiving second indication information reported from the first UE through a UE capability reporting procedure, wherein the second indication information is used to indicate whether the first UE supports multi-UE aggregation transmission; or
a third indication information receiving unit, used for receiving third indication information reported from the second UE through a UE capability reporting procedure, wherein the third indication information is used to indicate whether the second UE supports multi-UE aggregation transmission.

73. A processor-readable storage medium, wherein the processor-readable storage medium stores a computer program, and the computer program is used to cause a processor to perform the method of any one of claims 1 to 10, or the method of any one of claims 11 to 19, or the method of any one of claims 20 to 24.
